(19) Europäisches Patentamt
European Patent Office
Office européen des brevets

(11) EP 4 235 352 A2

(12) EUROPEAN PATENT APPLICATION

(43) Date of publication:
30.08.2023 Bulletin 2023/35

(51) International Patent Classification (IPC):
*G05F 7/00* (2006.01)

(21) Application number: 23165705.7

(22) Date of filing: 21.04.2022

(52) Cooperative Patent Classification (CPC):
A01D 34/008

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 22.04.2021 IT 202100010286

(62) Document number(s) of the earlier application(s) in accordance with Art. 76 EPC:
22169287.4 / 4 079 132

(71) Applicant: Stiga S.p.A. in breve anche St. S.p.A.
31033 Castelfranco Veneto (TV) (IT)

(72) Inventors:
• SCAPIN, Michele
I-36061 Bassano del Grappa (VI) (IT)
• SOLANO, Marco
Vedelago (TV) (IT)

• MORGAN, Alessandro
31020 Refrontolo (TV) (IT)
• NEDORUBAN, Eugeniu
Castelfranco Veneto (TV) (IT)
• CECCHETTO, Mauro
I-35018 San Martino di Lupari (PD) (IT)
• CERCHIARO, Loris
Fontaniva (PD) (IT)

(74) Representative: PGA S.p.A.
Via Mascheroni, 31
20145 Milano (IT)

Remarks:
This application was filed on 30.03.2023 as a divisional application to the application mentioned under INID code 62.

(54) **UNIT FOR CONTROLLING A SELF-PROPELLED VEHICLE FOR MAINTENANCE OPERATIONS OF A GROUND OR A FLOOR AND ASSOCIATED CONTROLLING METHOD**

(57) The present invention relates to a control unit (300) for controlling a self-propelled vehicle (10), electrically connectable with at least one wire (201) delimiting a ground or floor (100) on which the self-propelled vehicle (10), when in use, carries out maintenance. The control unit (300) comprises at least one output (301) configured to be connected to the wire (201) and on which, when in use, a driving signal (30) is fed for the self-propelled vehicle (10), a power stage (302) connected to the output (301) and configured to feed the driving signal (30) on the output (301), and a resistance measurement stage (303), connected to the output (301), configured to measure an electrical resistance (R) of the wire (201) when connected to the output (301). According to the invention, the control unit (300) envisages an operational measurement configuration and an operational power supply configuration. In the operational measurement configuration, the control unit (300) varies, through the power stage (302), the voltage and/or the current of the driving signal (30) according to the electrical resistance (R) measured by the resistance measurement stage (303). In the operational power supply configuration, the control unit (300) performs, through the power stage (302), at least one generation step of a driving signal (30) for the self-propelled vehicle (10).

FIG.5

## Description

## Technical field

The present invention relates to the field of self-propelled vehicles and in particular relates to a control unit intended to cooperate with a self-propelled vehicle for ground or floor maintenance applications.

The present invention also relates to a control method of a self-propelled vehicle.

## Background Art

It is known that self-propelled vehicles can be used for ground or floor maintenance applications.

Self-propelled vehicles can for example be used to trim the ground or to carry out floor washing or scrubbing operations.

In particular, such self-propelled vehicles are typically provided with a motor operatively connected to wheels, and such a motor allows the propulsion of the vehicle. Such self-propelled vehicles are further provided with a battery which powers the motor. Preferably the battery is of rechargeable type.

Also known are the charging bases or stations for said self-propelled vehicles, which allow the battery of the self-propelled vehicle to be recharged. The charging occurs by means of an electrical coupling made between two or more contacts.

The self-propelled vehicles typically comprise data processing units or control units that allow the vehicle to move in a predetermined area and to recognize the presence of the base and also to recognize when the battery must be recharged, since it is characterized by a low residual charge level, and that allow the vehicle to automatically move towards the charging base, typically without operator intervention.

The self-propelled vehicles typically move over areas that can be delimited, for example, by wires or equivalent means of electrical conduction, on which, in use, a given electrical signal is transmitted as a result of an electromagnetic field diffusion that can be received by receivers on board the self-propelled vehicle.

The position of the self-propelled vehicle can in some cases be determined by the characteristics of the electromagnetic signal diffused by the wire. In particular, it is known that the position of the self-propelled vehicle can be determined by the intensity of the electromagnetic field received at the self-propelled vehicle by the receiver.

Any unintended alterations of the electromagnetic field can result in an inaccuracy in the positioning of the self-propelled vehicle within the aforementioned area. Consequently, such possible alterations can also cause a failure to reach the charging base when necessary, since due to said electromagnetic field alterations, the self-propelled vehicle also determines with respect to the charging base, its own different position with respect to that actually assumed.

Document US2020/0033386A1 discloses a demarcating system for indicating the boundary of an area to a robotic lawnmower, which has a receiver for receiving electromagnetic signals. The system includes a control system, a wire loop, a signal generator and current sensing circuitry. The signal generator is electrically connected to the wire loop in order to apply voltage signals thereto, such signals causing the emission of corresponding electromagnetic boundary indicating signals from the wire loop that may be received by the receiver. The current sensing circuitry senses current signals present within the wire loop and the processors of the control system analyse such current signals. The processors of the control system are programmed to operate in a calibration mode whereby they cause the signal generator to apply a series of test voltage waveforms to the wire loop, each of the test voltage waveforms generating a corresponding current waveform within the wire loop.

## Objects

The object of the present disclosure is to describe a control unit which allows to compensate for any alterations of the guide wire of the self-propelled vehicle, so that in particular the positioning accuracy of the self-propelled vehicle is affected as little as possible by the alteration of the conditions of such a guide wire.

It is a further object of the present disclosure to describe a control unit which allows a robust control signal to be transmitted with respect to the possible presence of electromagnetic disturbances.

In particular, the object of the present disclosure is to describe a control unit which allows to compensate for the alteration of resistance of the guide wire of the self-propelled vehicle, so that in particular the positioning accuracy of the self-propelled vehicle is affected as little as possible by the alteration of the conditions of the guide wire.

Furthermore, the object of the present disclosure is to describe a control unit whose electronic circuitry is robust.

The object of the present disclosure is to describe a control method of a self-propelled vehicle which allows to overcome the drawbacks described above.

More in particular, it is an object of the present disclosure to describe a control method of a self-propelled vehicle which allows, by sending a predetermined driving signal, the self-propelled vehicle to determine its position effectively, precisely and safely.

It is a further object of the present disclosure to describe a control method which allows to compensate for any alterations of the guide wire of the self-propelled vehicle, so that in particular the positioning accuracy of the self-propelled vehicle is affected as little as possible by the alteration of the conditions of said guide wire.

In particular, it is a further object of the present disclosure to describe a control method which allows to compensate for the alteration of resistance of the guide wire of the self-propelled vehicle, so that in particular the positioning accuracy of the self-propelled vehicle is affected as little as possible by the alteration of the conditions of the guide wire.

It is a further object of the present disclosure to describe a control method which allows to diffuse a robust signal with respect to the possible presence of electromagnetic disturbances.

A further object of the present disclosure is to disclose a self-propelled vehicle which allows to resolve the drawbacks described above.

A further object of the present disclosure is to disclose a self-propelled vehicle that can safely determine its position, regardless of the condition of the wire.

A further object of the present disclosure is to describe a self-propelled vehicle configured to robustly receive a driving signal with respect to any disturbances.

A further object of the present disclosure is to describe a self-propelled vehicle which is safe to use.

The object of the present disclosure is to describe a charging base which allows to resolve the above described drawbacks.

The object of the present disclosure is that of describing a charging base which allows a precise approach of the self-propelled vehicle, in particular when the self-propelled vehicle is to be recharged.

The object of the present disclosure is to describe a charging base configured to send a precision positioning signal for the self-propelled vehicle, in particular receivable when said self-propelled vehicle is at least near the base.

The object of the present disclosure is also to describe a control unit, intended to be operated in use with a self-propelled vehicle, which allows to resolve the drawbacks described above.

In particular, the object of the present disclosure is to describe a control unit which, by sending a predetermined driving signal, allows the self-propelled vehicle to determine its position effectively, accurately and safely.

**Table of contents**

The invention will now be described in accordance with some salient aspects, which are presented below. Such aspects can be combined with each other and/or with portions of the disclosure and the claims.

Control unit

In accordance with the present disclosure, a control unit (300) is described herein for controlling a self-propelled vehicle (10), in which the control unit (300) is configured to be electrically connected with at least one wire (201) delimiting a ground or floor (100) on which the self-propelled vehicle (10), when in use, carries out maintenance; said control unit (300) comprising:

- at least one output (301) configured to be connected to the wire (201) and on which, when in use, a driving signal (30) is fed for the self-propelled vehicle (10),
- a power stage (302) connected to the output (301) and configured to feed the driving signal (30) on the output (301),
- a resistance measurement stage (303), connected to the output (301), configured to measure an electrical resistance (R) of the wire (201) when connected with the output (301);

in which

the control unit (300) comprises an operational measurement configuration in which it is configured to vary, through the power stage (302), the voltage and/or current of the driving signal (30) according to the electrical resistance (R) measured by the resistance measurement stage (303),

and in which the control unit (300) comprises an operational power supply configuration, in which it is configured to carry out, through the power stage (302) at least a first step of generating a driving signal (30) for the self-propelled vehicle (10), in which the first generation step of generating comprises a generation of at least one main portion (30') of driving signal (30) suited to cause an identification of a positional relationship between the self-propelled vehicle (10) and the wire (201) and/or an identification of a working perimeter for the self-propelled vehicle (10), said perimeter being defined by the wire (201).

In accordance with the present disclosure, a control unit (300) is described herein for controlling a self-propelled vehicle (10), in which the control unit (300) is configured to be electrically connected with at least one wire (201) delimiting a ground or floor (100) on which the self-propelled vehicle (10), when in use, carries out maintenance; said control unit (300) comprising:

- at least one output (301) configured to be connected to the wire (201) and on which, when in use, a driving signal (30) is fed for the self-propelled vehicle (10),
- a power stage (302) connected to the output (301) and configured to feed the driving signal (30) on the output (301),
- a resistance measurement stage (303), connected with the output (301), configured to measure an electrical resistance (R) of the wire (201) when connected to the output (301);

in which

the control unit (300) comprises an operational measurement configuration in which it is configured to vary, through the power stage (302), the voltage and/or current of the driving signal (30) according to the electrical resistance (R) measured by the resistance measurement stage (303),

and in which the control unit (300) comprises an operational power supply configuration, in which it is configured to perform, through the power stage (302):

- a first generation of a driving signal (30) for the self-propelled vehicle (10), in which the first generation comprises a generation of at least one main portion (30') of driving signal (30) suited to cause an identification of a positional relationship between the self-propelled vehicle (10) and the wire (201) and/or an identification of a working perimeter for the self-propelled vehicle (10), said perimeter being defined by the wire (201);

- a second generation of a driving signal (30) for the self-propelled vehicle (10), in which the second generation comprises a generation of the first main portion (30') of driving signal (30) and comprises the generation of at least one auxiliary portion (30"-30‴) of the driving signal (30).

In accordance with the present disclosure, a control unit (300) is described for controlling a self-propelled vehicle (10), in which the control unit (300) is configured to be electrically connected with at least one wire (201) delimiting a ground or floor (100) on which the self-propelled vehicle (10), when in use, carries out maintenance; said control unit (300) comprising:

- at least one output (301) configured to be connected to the wire (201) and on which, when in use, a driving signal (30) is fed for the self-propelled vehicle (10),

- a power stage (302) connected to the output (301) and configured to feed the driving signal (30) on the output (301),

in which

the control unit (300) comprises an operational power supply configuration, in which it is configured to perform, through the power stage (302):

- a first generation of a driving signal (30) for the self-propelled vehicle (10), in which the first generation comprises a generation of at least one main portion (30') of driving signal (30) suitable to cause an identification of a positional relationship between the self-propelled vehicle (10) and the wire (201) and/or an identification of a working perimeter for the self-propelled vehicle (10), said working perimeter being defined by the wire (201), in which said first generation of the driving signal comprises the generation of at least one auxiliary portion (30"-30‴) of the driving signal (30).

In accordance with a further non-limiting aspect, said control unit (300), in the operational power supply configuration, is configured to carry out, through the power stage (302), a further generation of a driving signal (30) for the self-propelled vehicle (10), in which the further generation comprises a generation of at least one main portion (30') of driving signal (30) suited to cause an identification of a positional relationship between the self-propelled vehicle (10) and the wire (201) and/or an identification of a working perimeter for the self-propelled vehicle (10), said perimeter being defined by the wire (201).

According to a further non-limiting aspect, the control unit (300) comprises:

- a resistance measurement stage (303), connected with the output (301), configured to measure an electrical resistance (R) of the wire (201) when connected to the output (301);

and in which the control unit (300) comprises an operational measurement configuration in which it is configured to vary, through the power stage (302), the voltage and/or current of the driving signal (30) according to the electrical resistance (R) measured by the resistance measurement stage (303).

According to a further non-limiting aspect, the control unit (300), in the operational power supply configuration, is configured to alternatively carry out a first generation of the driving signal (30) and a further generation of the driving signal (30).

According to a further non-limiting aspect, in the further generation of the driving signal (30), such a driving signal does not comprise said auxiliary portion (30"-30'").

In accordance with the present disclosure, a control unit (300) is described herein for controlling a self-propelled vehicle (10), in which the control unit (300) is configured to be electrically connected with at least one wire (201) delimiting a ground or floor (100) on which the self-propelled vehicle (10), when in use, carries out maintenance; said control unit (300) comprising:

- at least one output (301) configured to be connected to the wire (201) and on which, when in use, a driving signal (30) is fed for the self-propelled vehicle (10),

- a power stage (302) connected to the output (301) and configured to feed the driving signal (30) on the output (301),

- a resistance measurement stage (303), connected with the output (301), configured to measure an electrical resistance (R) of the wire (201) when connected to the output (301);

in which

- the resistance measurement stage (303) comprises an output (303u), connected to the power stage (302) and on which, when in use, a control signal ($s_c(t)$) passes, intended to cause a variation of the voltage and/or current of said driving signal (30) according to the electrical resistance (R) of the wire (201) measured by the resistance measurement stage (303),

- the power stage (302) comprises a Buck converter (304) and an H-bridge (305), in which the Buck converter (304) feeds an input of the H-bridge (305) with a control signal, and in which at least one of the Buck converter (304) and the H-bridge (305) receives the control signal ($s_c$(t)) from the output (303u) of the resistance measurement stage (303).

According to a further non-limiting aspect, the H-bridge (305) is connected in series to the Buck converter (304).

According to a further non-limiting aspect, the Buck converter (304) feeds an input of the H-bridge (305) with a control signal, said input of the H-bridge (305) is a power input, and said control signal is a power signal.

According to a further non-limiting aspect, said resistance measurement stage (303) comprises an output (303u), connected to the power stage (302) and on which, when in use, a control signal ($s_c$(t)) passes, intended to cause a variation of the voltage and/or current of said driving signal (30) according to the electrical resistance (R) of the wire (201) measured by the resistance measurement stage (303).

According to a further non-limiting aspect, the power stage 302 acts as a constant current generator.

According to a further non-limiting aspect, the assembly formed by the resistance measurement stage (303) and the power stage (302) is configured to maintain an intensity of electromagnetic field (B) generated by the wire (201) constant as the electrical resistance (R) of the wire (201) varies.

According to a further non-limiting aspect, the control unit (300) is configured to increase the voltage and/or the current of the driving signal (30) with the increase of the resistance (R) measured by the resistance measurement stage (303), optionally to maintain an intensity of the electromagnetic field (B) generated by the wire (201) at least temporarily constant as the electrical resistance (R) of the wire (201) varies.

According to a further non-limiting aspect, the control signal ($s_c$(t)) is intended to cause an increase in the voltage and/or the current of said driving signal (30) as the electrical resistance (R) of the wire (201) increases, optionally to maintain an intensity of electromagnetic field (B) generated by the wire (201), when in use, at least temporarily constant as the electrical resistance (R) of the wire (201) varies.

According to a further non-limiting aspect, the control unit (300) in the operational measurement configuration is configured to vary, through the power stage (302), the voltage and/or current of the driving signal (30) according to the electrical resistance (R) measured by the resistance measurement stage (303), so that a current of predetermined value, in particular of predetermined average value, is maintained on said wire (201) at least temporarily as the measured electrical resistance (R) varies.

According to a further non-limiting aspect, the power stage (302) comprises a Buck converter (304) and an H-bridge (305), in which the Buck converter (304) feeds an input of the H-bridge (305) with a control signal, and in which at least one of the Buck converter (304) and the H-bridge (305) receives the control signal ($s_c$(t)) from the output (303u) of the resistance measurement stage (303).

According to a further non-limiting aspect, the H-bridge (305) is configured at least to cause a temporary polarity inversion of the driving signal (30) in use fed on the wire (201).

According to a further non-limiting aspect, said Buck converter (304) is configured to operate with a feedback control according to said electrical resistance (R) of the wire (201), and the control signal ($s_c$(t)) is a feedback control signal.

According to a further non-limiting aspect, the control signal (($s_c$(t)) has a voltage proportional to the resistance (R) of the wire (201).

According to a further non-limiting aspect, the control signal (($s_c$(t)) has an increasing voltage, when in use as the resistance (R) of the wire (201) increases.

According to a further non-limiting aspect, the control unit (300) comprises a switching stage (306) located downstream of the power stage (302) and directly connected to the output (301); said switching stage (306) causing a switch-over between the operational measurement configuration and the operational power supply configuration.

According to a further non-limiting aspect, the switching stage (306) is configured to operationally disconnect the resistance measurement stage (303) from the wire (201), at least when the control unit (300) is in said operational power supply configuration.

According to a further non-limiting aspect, the control unit (300) comprises a wireless communication module (308) configured to establish a data communication channel to a wireless receiver, in particular to a wireless receiver installed on said self-propelled vehicle (10).

According to a further non-limiting aspect, the control unit (300) is configured to electronically detect when there is an electrical energy power transfer from a base (200) for controlling and/or charging the self-propelled vehicle (10) to the self-propelled vehicle (10), particularly for charging a battery (10b) of the self-propelled vehicle (10), and is configured to activate the wireless communication module (308) and to establish the data communication channel only when the electrical energy power transfer is detected.

According to a further non-limiting aspect, the control unit (300) in the operational power supply configuration is configured to carry out:

- a second generation of the driving signal (30) for the self-propelled vehicle (10), in which the second generation comprises a generation of the first main portion (30') of driving signal (30) and comprises the generation of at least one auxiliary portion (30"-30‴

) of the driving signal (30);
- a second transmission, in which the driving signal (30) for the self-propelled vehicle (10) generated in the second transmission is fed on the wire (201).

In accordance with the present disclosure, a control unit (300) is described herein for controlling a self-propelled vehicle (10), in which the control unit (300) is configured to be electrically connected with at least one wire (201) delimiting a ground or floor (100) on which the self-propelled vehicle (10), when in use, carries out maintenance; said control unit (300) comprising:

- at least one output (301) configured to be connected to the wire (201) and on which, when in use, a driving signal (30) is fed for the self-propelled vehicle (10),
- a power stage (302) connected to the output (301) and configured to feed the driving signal (30) on the output (301),
- a resistance measurement stage (303), connected with the output (301), configured to measure an electrical resistance of the wire (201) when connected to the output (301);

in which
the control unit (300) comprises an operational power supply configuration, in which it is configured to perform, through the power stage (302):

- a first generation step of a driving signal (30) for the self-propelled vehicle (10), in which the first generation step comprises a generation of at least one main portion (30') of driving signal (30) suited to cause an identification of a positional relationship between the self-propelled vehicle (10) and the wire (201) and/or an identification of a perimeter defined by the wire (201);
- at least a first transmission, in which on a wire (201) placed in correspondence of the ground or floor (100) a driving signal (30) is fed for the self-propelled vehicle (10), and in which in the first transmission the wire (201) radiates said driving signal (30) through an electromagnetic field;
- a second generation of a driving signal (30) for the self-propelled vehicle (10), in which the second generation comprises a generation of the first main portion (30') of driving signal (30) and comprises the generation of at least one auxiliary portion (30"-30''') of the driving signal (30).
- a second transmission, in which the driving signal (30) for the self-propelled vehicle (10) generated in the second transmission is fed on the wire (201).

According to a further non-limiting aspect, the auxiliary portion (30",30''') is at least in part specifically configured and/or intended to cause an identification of at least a first base (200) for a self-propelled vehicle (10).
According to a further non-limiting aspect, the auxiliary portion (30", 30''') is at least in part specifically configured and/or intended to cause a differential identification of at least a first base (200) for a self-propelled vehicle (10) and a second base (200), distinct from the first base (200), for a self-propelled vehicle.
According to a further non-limiting aspect, the control unit (300) is configured to generate at least a first auxiliary signal (40) for controlling the self-propelled vehicle (10) when near the base (200).
According to a further non-limiting aspect, the control unit (300) is configured to generate at least a second auxiliary signal (40) for controlling the self-propelled vehicle (10) when near the base (200).
According to a further non-limiting aspect, the control unit (300) is configured to transmit said at least a first auxiliary signal (40) on at least a first pair of conductors (210) positioned within the base (200), optionally to transmit the first and the second auxiliary signal (40) on at least a first pair of conductors (210) positioned within the base (200), optionally to transmit the first and the second auxiliary signal (40) on at least one of a first pair of conductors (210) and a second pair of conductors (220), said first pair of conductors (210) and said second pair of conductors (220) being positioned within the base (200).
According to a further non-limiting aspect, the control unit (300) comprises a data processing unit (307) configured to cause a sending of a predetermined sequence, in particular a predetermined binary sequence, intended to cause a control of the H-bridge (305) for a polarity alteration of at least part of said driving signal (30).
According to a further non-limiting aspect, the wireless communication module (308) is a Bluetooth module or a WiFi module, or a ZigBee module, or a WiMax module.
According to a further non-limiting aspect, the auxiliary portion (30"-30''') comprises at least one of the sub-portions of the following list:

- a sub-portion (30") of driving signal (30) comprising useful data, for the control of said self-propelled vehicle (10);
- a sub-portion (30''') of driving signal (30) comprising at least one dummy datum.

According to a further non-limiting aspect, the auxiliary portion (30", 30''') comprises at least one portion of temporal spacing (Tp) signal with respect to further transmissions driving signals (30), said portion of temporal spacing (Tp) signal not carrying useful data for driving said self-propelled vehicle and/or having a substantially null mean value.
According to a further non-limiting aspect, the control unit (300) is configured to perform a transmission of the driving signal (30) on the wire (201) following the first generation of the driving signal (30), optionally following the first and the further generation of the driving signal (30).

According to a further non-limiting aspect, the control unit (300) is configured to stop the transmission of the driving signal (30) on the wire (201) for a certain temporal spacing (Tp), in which no driving signal (30) is transmitted on the wire (201).

According to a further non-limiting aspect, the main portion (30') suited to cause an identification of a positional relationship between the self-propelled vehicle (10) and the wire (201) and/or an identification of a perimeter defined by the wire (201) is specifically configured and intended to allow a determination of a position assumed by the self-propelled vehicle (10) and said main portion (30') comprises its own univocal coding, optionally its own univocal binary coding.

Charging base

According to a further aspect a base (200) is described for controlling and/or charging a self-propelled vehicle (10) in which said base comprises a control unit (300) according to one or more of the aspects described herein.

In particular, according to a further aspect a base (200) is described for controlling and/or charging a self-propelled vehicle (10) according to one or more of the aspects described herein, in which said base comprises a control unit (300) according to one or more of the aspects described herein.

According to a further non-limiting aspect, the base (200) comprises at least one pair of power contacts suited to transfer electrical energy towards a supply battery of said self-propelled vehicle (10).

According to a further non-limiting aspect, the base (200) comprises a connector suited to allow the removable connection of said wire (201).

According to a further non-limiting aspect, said connector comprises at least one terminal electrically connected with the control unit (300).

According to a further non-limiting aspect, the base (200) comprises at least a first pair of conductors (210) configured to transmit an auxiliary signal (40) for controlling the self-propelled vehicle (10) when near the base.

According to a further non-limiting aspect, the base (200) comprises at least a second pair of conductors (220) configured to transmit an auxiliary signal (40) for controlling the self-propelled vehicle (10) when near the base.

According to a further non-limiting aspect, the first pair of conductors (210) has a greater length with respect to the length of the second pair of conductors (220) and/or the first pair of conductors (210) is oriented differently with respect to the second pair of conductors (220) and/or the first pair of conductors (210) is positioned at a different height with respect to the height at which the second pair of conductors (220) lies.

Control method

In accordance with the present disclosure, a control method is described herein for a self-propelled vehicle (10) configured to carry out maintenance on a ground or floor (100), said method comprising:

- a first generation step of a driving signal (30) for the self-propelled vehicle (10), in which the first generation step comprises a generation of at least one main portion (30') of the driving signal (30) suited to cause, when the driving signal (30) is received by the self-propelled vehicle (10), an identification of a perimeter defined by the wire (201) and/or a determination of the position of the self-propelled vehicle (10) in an area of said ground or floor (100) delimited by said wire (201);
- at least a first transmission step, in which on a wire (201) placed in correspondence of the ground or floor (100) a driving signal (30) is fed for the self-propelled vehicle (10), and in which in the transmission step the wire (201) radiates said driving signal (30) through an electromagnetic field;
- a measurement step of the resistance (R) of the wire (201);
- a step of controlling a voltage and/or current of said driving signal (30), in which the voltage and/or the current of the driving signal (30) is modified in relation to the resistance (R) of the wire (201).

According to a further non-limiting aspect, the identification of the perimeter and/or the determination of the position are carried out by the self-propelled vehicle (10), in particular by the data processing unit (13) of the self-propelled vehicle (10).

According to a further non-limiting aspect, the control method for the self-propelled vehicle (10) is carried out through the control unit (300) according to one or more of the aspects described herein.

According to a further non-limiting aspect, the measurement step of the resistance (R) of the wire (201), and/or the step of controlling the voltage and/or current of said driving signal (30), is carried out before the transmission step.

According to a further non-limiting aspect, the control method comprises a step of electronically determining a distance instantaneously assumed by the self-propelled vehicle (10) with respect to the wire (201) according to a power and/or electromagnetic field intensity with which the driving signal (30) is received by the self-propelled vehicle (10).

According to a further non-limiting aspect, the control method comprises:

- a second generation step of a driving signal (30) for the self-propelled vehicle (10), in which the second generation step comprises a generation of the first main portion (30') of driving signal (30) and comprises the generation of at least one auxiliary portion (30"-30‴) of the driving signal (30).

- a second transmission step, in which the driving signal (30) for the self-propelled vehicle (10) generated in the second transmission step is fed on the wire (201).

In accordance with the present disclosure, a control method is described herein for a self-propelled vehicle (10) configured to carry out maintenance on a ground or floor (100), said method comprising:

- a first generation step of a driving signal (30) for the self-propelled vehicle (10), in which the first generation step comprises a generation of at least one main portion (30') of driving signal (30) suited to cause an identification of a positional relationship between the self-propelled vehicle (10) and the wire (201) and/or an identification of a perimeter defined by the wire (201);
- a second generation step of a driving signal (30) for the self-propelled vehicle (10), in which the second generation step comprises a generation of the first main portion (30') of driving signal (30) and comprises the generation of at least one auxiliary portion (30"-30‴) of the driving signal (30).
- a first transmission step, in which on a wire (201) placed in correspondence of the ground or floor (100) said driving signal (30) is fed for the self-propelled vehicle (10) generated in the first transmission step,
- a second transmission step, in which the driving signal (30) for the self-propelled vehicle (10) generated in the second transmission step is fed on the wire (201);

and in which in the first and the second transmission step the wire (201) radiates said driving signal (30) through an electromagnetic field towards the self-propelled vehicle (10).

In accordance with the present disclosure, a control method is described herein for a self-propelled vehicle (10) configured to carry out maintenance on a ground or floor (100), said method comprising:

- a first generation step of a driving signal (30) for the self-propelled vehicle (10), in which the first generation step comprises a generation of at least one main portion (30') of driving signal (30) suited to cause, when the driving signal (30) is received by the self-propelled vehicle (10), an identification of a perimeter defined by the wire (201) and/or a determination of the position of the self-propelled vehicle (10) in an area of said ground or floor (100) delimited by said wire (201), and in which the first generation step of the driving signal comprises the generation of at least one auxiliary portion (30"-30‴) of the driving signal (30);
- at least a first transmission step, in which on the wire

(201) placed in correspondence of the ground or floor (100) the driving signal (30) is fed for the self-propelled vehicle (10), and in which in the transmission step the wire (201) radiates said driving signal (30) through an electromagnetic field.

According to a further non-limiting aspect, the method comprises a further step of generating a driving signal (30) for the self-propelled vehicle (10), in which the further generation step comprises a generation of at least one main portion (30') of the driving signal (30) suited to cause an identification of a positional relationship between the self-propelled vehicle (10) and the wire (201) and/or an identification of a working perimeter for the self-propelled vehicle (10), said perimeter being defined by the wire (201).

According to a further non-limiting aspect, the method comprises a further transmission step, in which on the wire (201) placed at the ground or floor (100) the driving signal (30) is fed for the self-propelled vehicle (10) generated in the further generation step, and in which in the further transmission step the wire (201) radiates said driving signal (30) through an electromagnetic field.

According to a further non-limiting aspect, the method comprises:

- a measurement step of the resistance (R) of the wire (201);
- a step of controlling a voltage and/or current of said driving signal (30), in which the voltage and/or the current of the driving signal (30) is modified in relation to the resistance (R) of the wire (201).

According to a further non-limiting aspect, the method comprises a step of controlling the self-propelled vehicle (10) through the reception of the driving signal (30) by the self-propelled vehicle (10) itself.

According to a further non-limiting aspect, the method comprises the alternative execution of the first generation step of the driving signal (30) and the further generation of the driving signal (30), and/or in which in the further generation step of the driving signal (30), said driving signal does not comprise said auxiliary portion (30"-30‴).

According to a further non-limiting aspect, the method comprises:

- a measurement step of the resistance (R) of the wire (201);
- a step of controlling a voltage and/or current of said driving signal (30), in which the voltage and/or the current of the driving signal (30) is modified in relation to the resistance (R) of the wire (201).

According to a further non-limiting aspect, the method comprises the activation of a command intended to release the self-propelled vehicle (10) from a base (200) for controlling and/or charging a self-propelled vehicle (10), and the measurement step of the resistance (R) of the wire (201) and the step of controlling the voltage and/or current of said driving signal (30) are performed at each activation of said command.

According to a further non-limiting aspect, the method comprises a step of stopping the first transmission step so that for a given temporal spacing (Tp), no driving signal (30) is transmitted on the wire (201).

According to a further non-limiting aspect, the method comprises a generation step of at least a first auxiliary signal (40) for controlling the self-propelled vehicle (10) when near the base (200).

According to a further non-limiting aspect, the method comprises a generation step of at least a second auxiliary signal (40) for controlling the self-propelled vehicle (10) when near the base (200).

According to a further non-limiting aspect, the method comprises a step of transmitting said first auxiliary signal (40) and/or said second auxiliary signal (40) on at least a first conductor (210) of the base (200), optionally in which the transmission of said first auxiliary signal (40) takes place on said first conductor (210) of the base (200) and in which the transmission of said second auxiliary signal (40) takes place on a second conductor (220) of the base (200).

According to a further non-limiting aspect, the method comprises activating a Buck converter (304) at least during the first generation step of the driving signal (30), optionally during the first and the second generation step of the driving signal (30).

According to a further non-limiting aspect, the method comprises the activation of an H-bridge (305) for a polarity adjustment of said driving signal (30), the activation of the Buck converter (304) is simultaneous with the activation of the H-bridge (305).

According to a further non-limiting aspect, the step of controlling a voltage and/or current of said driving signal (30) comprises transmitting a control signal ($s_c(t)$), which is transmitted from an output (303u) of a resistance measurement stage (303) electrically connected to said wire (201) to the Buck converter (304).

According to a further non-limiting aspect, the measurement step of the resistance (R) of the wire (201) is carried out by a resistance measurement stage (303) connected to the wire (201), and comprises transmitting a control signal ($s_c(t)$) to cause a variation of the voltage and/or the current of the driving signal (30) according to the electrical resistance (R) of the wire (201) measured by the resistance measurement stage (303).

According to a further non-limiting aspect, the step of controlling the voltage and/or the current of the driving signal (30) comprises an increase of the voltage and/or the current of the driving signal (30) as the resistance (R) of the wire (201) increases, optionally to maintain an intensity of the electromagnetic field (B) generated by the wire (201) at least temporarily constant as the electrical resistance (R) of the wire (201) varies.

According to a further non-limiting aspect, the method, in the step of controlling the voltage and/or the current of the driving signal (30) comprises a step of increasing the voltage and/or current of said driving signal (30) as the electrical resistance (R) of the wire (201) increases, optionally to maintain an intensity of the electromagnetic field (B) generated in use by the wire (201) at least temporarily constant as the electrical resistance (R) of the wire (201) varies, said increase being caused by the control signal ($s_c(t)$).

According to a further non-limiting aspect, the control signal ($s_c(t)$) is a feedback control signal and/or the method comprises a feedback control of said Buck converter (304) through said control signal ($s_c(t)$).

According to a further non-limiting aspect, the control method comprises a step of approximating the self-propelled vehicle (10) to the base (200) and comprises a step of transferring electrical energy from the base (200) to the self-propelled vehicle (10) for charging a battery (10b) of the self-propelled vehicle (10).

According to a further non-limiting aspect, the control method comprises the activation of a wireless communication module (308) positioned on said base (200) and comprises the establishment of a wireless communication channel between said wireless communication module (308) and a wireless receiver module present on said self-propelled vehicle (10).

According to a further non-limiting aspect, the activation of the wireless communication module (308) occurs upon the transfer of electrical energy from a base (200) to the self-propelled vehicle (10).

According to a further non-limiting aspect, the method comprises a reception step of the driving signal (30) on at least one electromagnetic signal receiving element (12', 12") of the self-propelled vehicle (10).

According to a further non-limiting aspect, the main portion (30') suited to cause an identification of a positional relationship between the self-propelled vehicle (10) and the wire (201) and/or an identification of a perimeter defined by the wire (201) is configured and specifically intended to allow determining a position assumed by the self-propelled vehicle (10) on said ground or floor (100) and said main portion (30') suited to cause an identification of the perimeter defined by the wire (201) comprises its own unique coding, optionally its own unique binary coding.

According to a further non-limiting aspect, the reception step of the driving signal (30) on the at least one electromagnetic signal receiving element (12', 12") of the self-propelled vehicle (10) is followed by a step of extracting said encoding, optionally by a step of extracting the binary encoding, and by a step of electronic determination of a distance instantaneously assumed by the self-propelled vehicle (10) with respect to the wire (201) according to said coding, optionally according to said binary coding, and/or according to a power and/or according to an electromagnetic field intensity with which the driving signal (30) is received on said electromagnetic signal receiving element (12', 12").

According to a further non-limiting aspect, the method comprises an adaptation step of a power with which said driving signal (30) is fed on said wire (201), said adaptation step of the power according to at least one external parameter, optionally in which the external parameter is part of the following list: ambient temperature, atmospheric pressure, ambient humidity, period of the year, wire length, wire section, self-propelled vehicle model.

According to a further non-limiting aspect, the first transmission step, optionally the first and the second transmission steps, comprise at least a temporary inversion of the polarity of the driving signal (30), said polarity inversion being carried out by an H-bridge (305) electrically connected to said wire (201).

According to a further non-limiting aspect, the at least one temporary inversion of the polarity of the driving signal (30) takes place automatically, according to a predefined inversion criterion.

According to a further aspect, the method comprises an activation of a data processing unit (307) of a control unit (300), for sending a predetermined sequence, in particular a predetermined binary sequence, intended to cause a control of an H-bridge (305) for a polarity alteration of at least part of said driving signal (30).

According to a further non-limiting aspect, said predetermined sequence, in particular said predetermined binary sequence, determines and/or is the inversion criterion.

Self-propelled vehicle

A self-propelled vehicle (10) is described herein, suited to be coupled with a base (200) according to one or more of the aspects described herein, in which the self-propelled vehicle (10) is configured to carry out maintenance of a ground or floor (100), and in which the self-propelled vehicle (10) comprises:

- a plurality of wheels or rollers (11), configured to allow the movement of the self-propelled vehicle (10) on said ground or floor (100), at least one of which is a drive wheel or roller;
- at least one electromagnetic signal receiving element (12', 12") configured to receive, in use, a driving signal (30) of the electromagnetic type, transmitted through a wire (201) delimiting said ground o floor (100),
- a data processing unit (13) operationally, optionally electrically, connected to the electromagnetic signal receiving element (12', 12"), and configured to electronically process the signal received by means of said at least one electromagnetic signal receiving element (12', 12") in order to determine a positional relationship between said wire (201) and the self-propelled vehicle (10), optionally to extract from said driving signal (30) a unique coding, optionally a unique binary coding from a main portion (30') of the driving signal (30) suited to cause an identification of a positional relationship between the self-propelled vehicle (10) and the wire (201) and/or an identification of a working perimeter for the self-propelled vehicle (10), said working perimeter being defined by the wire (201),

said data processing unit (13) being configured to carry out an electronic determination of a distance instantaneously assumed by the self-propelled vehicle (10) with respect to the wire (201) according to said coding, optionally in accordance with said binary coding, and/or in accordance with a power with which the driving signal (30) is received on said at least one electromagnetic signal receiving element (12', 12").

According to a further non-limiting aspect, the self-propelled vehicle (10) comprises a motor, in particular an electric motor, electrically connected and selectively powered by the battery (10b); said electric motor being mechanically connected with at least said drive wheel or roller.

According to a further non-limiting aspect, the self-propelled vehicle (10) comprises a rechargeable battery (10b), and is configured to allow charging the battery (10b) when in correspondence with a base (200) for controlling and/or charging the self-propelled vehicle (10) by means of a transfer of electrical energy from the base (200) to the battery (10b).

According to a further non-limiting aspect, the self-propelled vehicle (10) comprises a wireless receiver configured to establish a data communication channel with a wireless communication module (308) of the base (200), said wireless receiver being configured to establish said data communication channel when the self-propelled vehicle (10) is in correspondence with said base (200).

According to a further non-limiting aspect, the at least one electromagnetic signal receiving element (12', 12") comprises a coil.

According to a further non-limiting aspect, the data processing unit (13), powered by said battery and operationally connected to said motor, is configured at least to manage an at least partially automatic control of the movimentation of the self-propelled vehicle (10) relative to the wire (201).

According to a further non-limiting aspect, the self-propelled vehicle (10) comprises a first and a second electromagnetic signal receiving element (12', 12"), and the data processing unit (13) is electrically connected to the first and to the second electromagnetic signal receiving element (12', 12").

According to a further non-limiting aspect, the first and the second electromagnetic signal receiving element (12', 12") respectively comprise a first and a second coil.

According to a further non-limiting aspect, the self-propelled vehicle (10) comprises a conditioning circuit, operationally connected to said at least one electromagnetic signal receiving element (12', 12"); said conditioning circuit being configured to carry out a filtering of an undesired electromagnetic noise, and/or to perform an amplification of the driving signal (30) received through the at least one electromagnetic signal receiving element (12', 12").

According to a further non-limiting aspect, the self-propelled vehicle (10) comprises a motor, operatively connected to said battery, said motor being configured to cause at least the actuation of said drive wheel or roller.

According to a further non-limiting aspect, the self-propelled vehicle (10) is a lawnmower.

Kit

According to a further aspect, a kit is described herein comprising the base (200) in accordance with one or more of the aspects described herein and a wire (201), in particular a wire delimiting the perimeter of a work area for a self-propelled vehicle (10).

According to a further aspect, a kit is described herein comprising the base (200) in accordance with one or more of the aspects described herein, a self-propelled vehicle (10) in accordance with one or more of the aspects described herein, and a wire (201), in particular a wire delimiting the perimeter of a work area for a self-propelled vehicle (10).

Computer program

In accordance with the present disclosure, a computer program is disclosed herein, comprising portions of software code that when run cause the control method to be executed according to one or more of the aspects disclosed herein.

In accordance with the present disclosure, a computer program is described herein, comprising portions of software code that when run cause the execution of:

- a first generation step of a driving signal (30) for the self-propelled vehicle (10), in which the first generation step comprises a generation of at least one main portion (30') of the driving signal (30) suited to cause, when the driving signal (30) is received by the self-propelled vehicle (10), an identification of a perimeter defined by the wire (201) and/or a determination of the position of the self-propelled vehicle (10) in an area of said ground or floor (100) delimited by said wire (201);
- at least a first transmission step, in which on a wire (201) placed in correspondence of the ground or floor (100) a driving signal (30) is fed for the self-propelled vehicle (10), and in which in the transmission step the wire (201) radiates said driving signal (30) through an electromagnetic field;
- a measurement step of the resistance (R) of the wire

(201);
- a step of controlling a voltage and/or current of said driving signal (30), in which the voltage and/or the current of the driving signal (30) is modified in relation to the resistance (R) of the wire (201).

According to a further non-limiting aspect, the computer program comprises portions of software code that when run cause the execution of the measurement step of the resistance (R) of the wire (201), and/or the step of controlling the voltage and/or current of said driving signal (30), prior to the transmission step.

According to a further non-limiting aspect, the computer program comprises portions of software code that when run cause the activation of a resistance measurement stage (303) for the execution of the measurement step of the resistance (R) of the wire (201), and/or for the execution of the step of controlling the voltage and/or current of said driving signal (30).

According to a further non-limiting aspect, the computer program comprises portions of software code that when run cause the execution of:

- a second generation step of a driving signal (30) for the self-propelled vehicle (10), in which the second generation step comprises a generation of the first main portion (30') of driving signal (30) and comprises the generation of at least one auxiliary portion (30"-30''') of the driving signal (30).
- a second transmission step, in which the driving signal (30) for the self-propelled vehicle (10) generated in the second transmission step is fed on the wire (201).

According to a further aspect a computer program is disclosed comprising portions of software code which when run cause the execution of:

- a first generation step of a driving signal (30) for the self-propelled vehicle (10), in which the first generation step comprises a generation of at least one main portion (30') of driving signal (30) suited to cause an identification of a positional relationship between the self-propelled vehicle (10) and the wire (201) and/or an identification of a perimeter defined by the wire (201);
- a second generation step of a driving signal (30) for the self-propelled vehicle (10), in which the second generation step comprises a generation of the first main portion (30') of driving signal (30) and comprises the generation of at least one auxiliary portion (30"-30''') of the driving signal (30).
- a first transmission step, in which on a wire (201) placed in correspondence of the ground or floor (100) said driving signal (30) is fed for the self-propelled vehicle (10) generated in the first transmission step,
- a second transmission step, in which the driving signal (30) for the self-propelled vehicle (10) generated in the second transmission step is fed on the wire (201);

and in which in the first and the second transmission step the wire (201) radiates said driving signal (30) through an electromagnetic field towards the self-propelled vehicle (10).

In accordance with the present disclosure, a computer program is described herein comprising portions of software code that when run cause the execution of:

- a first generation step of a driving signal (30) for the self-propelled vehicle (10), in which the first generation step comprises a generation of at least one main portion (30') of driving signal (30) suited to cause, when the driving signal (30) is received by the self-propelled vehicle (10), an identification of a perimeter defined by the wire (201) and/or a determination of the position of the self-propelled vehicle (10) in an area of said ground or floor (100) delimited by said wire (201), and in which the first generation step of the driving signal comprises the generation of at least one auxiliary portion (30''-30''') of the driving signal (30);
- at least a first transmission step, in which on the wire (201) placed in correspondence of the ground or floor (100) the driving signal (30) is fed for the self-propelled vehicle (10), and in which in the transmission step the wire (201) radiates said driving signal (30) through an electromagnetic field.

According to a further non-limiting aspect, the computer program comprises software code portions which when run cause the execution of a further generation step of a driving signal (30) for the self-propelled vehicle (10), in which the further generation step comprises a generation of at least a main portion (30') of the driving signal (30) suited to cause an identification of a positional relationship between the self-propelled vehicle (10) and the wire (201) and/or an identification of a working perimeter for the self-propelled vehicle (10), said perimeter being defined by the wire (201).

According to a further non-limiting aspect, the computer program comprises portions of software code that when run cause the execution of a further transmission step, in which the driving signal (30) for the self-propelled vehicle (10) generated in the further generation step is fed on the wire (201) placed in correspondence with the ground or floor (100), and in which in the further transmission step the wire (201) radiates said driving signal (30) through an electromagnetic field.

According to a further non-limiting aspect, the computer program comprises portions of software code that when run cause the execution of:

- a measurement step of the resistance (R) of the wire (201);

- a step of controlling a voltage and/or current of said driving signal (30), in which the voltage and/or the current of the driving signal (30) is modified in relation to the resistance (R) of the wire (201).

According to a further non-limiting aspect, the portions of software code, when run, cause the alternative execution of the first generation step of the driving signal (30) and the further generation of the driving signal (30), and/or in which in the further generation step of the driving signal (30), said driving signal does not comprise said auxiliary portion (30''-30''').

According to a further non-limiting aspect, a computer program is described comprising portions of software code which, when run, cause the activation of a data processing unit (307) of a control unit (300), for sending a predetermined sequence, in particular a predetermined binary sequence, intended to cause a control of an H-bridge (305) for a polarity alteration of at least part of said driving signal (30).

According to a further non-limiting aspect, a computer program is described comprising portions of software code which, when run, cause the activation, in particular the sending to the self-propelled vehicle (10), of a command intended to cause the self-propelled vehicle (10) to exit from a base (200) for controlling and/or charging a self-propelled vehicle (10).

According to a further non-limiting aspect, the computer program comprises portions of software code which, when run, cause the execution of the measurement step of the resistance (R) of the wire (201) and the step of controlling the voltage and/or current of said driving signal (30) in correspondence with each activation of said command and/or in correspondence with each sending of said command to the self-propelled vehicle (10).

According to a further non-limiting aspect, the computer program comprises portions of software code which, when run, cause a stop of the first transmission step, as a result of which, for a given temporal spacing (Tp), no driving signal (30) is transmitted on the wire (201).

According to a further non-limiting aspect, the computer program comprises software code portions which, when run, cause a generation of at least a first auxiliary signal (40) for controlling the self-propelled vehicle (10) when near the base (200) and/or cause a generation of at least a second auxiliary signal (40) for controlling the self-propelled vehicle (10) when near the base (200).

According to a further non-limiting aspect, the computer program comprises portions of software code which, when run, cause a transmission of said first auxiliary signal (40) and/or of said second auxiliary signal (40) on at least a first conductor (210) of the base (200), optionally in which the transmission of said first auxiliary signal (40) takes place on said first conductor (210) of the base (200) and in which the transmission of said second auxiliary signal (40) takes place on a second conductor (220) of the base (200).

According to a further non-limiting aspect, the computer program comprises portions of software code which, when run, cause the step of controlling the voltage and/or current the driving signal (30) to comprise an increase in the voltage and/or current of the driving signal (30) as the resistance (R) of the wire (201) increases, optionally to maintain an intensity of the electromagnetic field (B) generated by the wire (201) at least temporarily constant as the electrical resistance (R) of the wire (201) varies.

According to a further non-limiting aspect, the computer program comprises portions of software code which, when run, cause the step of controlling the voltage and/or current of the driving signal (30) to comprise a step of increasing the voltage and/or current of said driving signal (30) as the electrical resistance (R) of the wire (201) increases, optionally to maintain an intensity of electromagnetic field (B) generated in use by the wire (201) at least temporarily constant as the electrical resistance (R) of the wire (201) varies, said increase being caused by the control signal ($s_c(t)$).

According to a further non-limiting aspect, the computer program comprises portions of software code which, when run, cause the activation of a Buck converter (304) at least during the first generation step of the driving signal (30), optionally during the first and the second generation step of the driving signal (30).

According to a further non-limiting aspect, the computer program comprises portions of software code which, when run, cause the activation of the H-bridge (305) and a control of said H-bridge (305) for a regulation of a polarity of said driving signal (30), said activation of the H-bridge (305) being simultaneous with said activation of said Buck converter (304).

According to a further non-limiting aspect, the computer program comprises portions of software code which, when run, cause, during the control of a voltage and/or current of said driving signal (30), the transmission of a control signal ($s_c(t)$), which is transmitted from an output (303u) of a resistance measurement stage (303) electrically connected to said wire (201) to the Buck converter (304) and/or to said H-bridge (305), optionally in which said control signal ($s_c(t)$) acts as a feedback signal.

According to a further non-limiting aspect, the computer program comprises portions of software code which, when run, cause the activation of a transfer of electrical energy from the base (200) to the self-propelled vehicle (10) for charging a battery (10b) of the self-propelled vehicle (10), in particular when the self-propelled vehicle (10) is substantially in correspondence with the base (200).

According to a further non-limiting aspect, the computer program comprises portions of software code which, when run, cause the activation of a wireless communication module (308) positioned on said base (200) and comprises the establishment of a wireless communication channel between said wireless communication module (308) and a wireless receiver module present on said self-propelled vehicle (10).

According to a further non-limiting aspect, the computer program comprises portions of software code which, when run, cause, during the first transmission step, optionally the first and the second transmission steps, at least a temporary inversion of the polarity of the driving signal (30), said inversion of the polarity being carried out by a control command sent to the H-bridge (305) electrically connected to said wire (201).

According to a further non-limiting aspect, the computer program comprises portions of software code which, when run, in sending said control command, cause a selective activation of at least one transistor, in particular a FET or MOS transistor, of said H-bridge (305).

According to a further non-limiting aspect, the computer program comprises portions of software code which, when run, cause the activation of a data processing unit (307) of a control unit (300), for sending a predetermined sequence, in particular a predetermined binary sequence, intended to cause a control of an H-bridge (305) for a polarity alteration of at least part of said driving signal (30), in which optionally said predetermined sequence, in particular said predetermined binary sequence, determines and/or is the inversion criterion.

For the purposes of the present description, "maintenance" means at least one of the activities of the following list: cutting grass, aspiration and/or collection of cut grass and/or leaves, blowing grass or leaves, washing a floor, aspiration of a floor, polishing a floor.

## Figures

Some embodiments of the present invention will be described below with reference to the accompanying figures. A brief description of the figures is given below.

Figure 1 illustrates a schematic diagram of a charging base for a self-propelled vehicle, in particular for a robot lawnmower; said figure also illustrates said robot lawnmower.
Figure 2 illustrates an electrical diagram of a control unit intended to be installed in a charging base for said self-propelled vehicle.
Figure 3 illustrates a first non-limiting example of a control signal passing over an electrical wire operatively connected to the control unit of figure 2.
Figure 4 illustrates a second non-limiting example of a control signal passing over an electrical wire operatively connected to the control unit of figure 2.
Figure 5 finally illustrates a block diagram of a specific and non-limiting embodiment of a control method of a self-propelled vehicle in accordance with the present disclosure.

## Detailed description

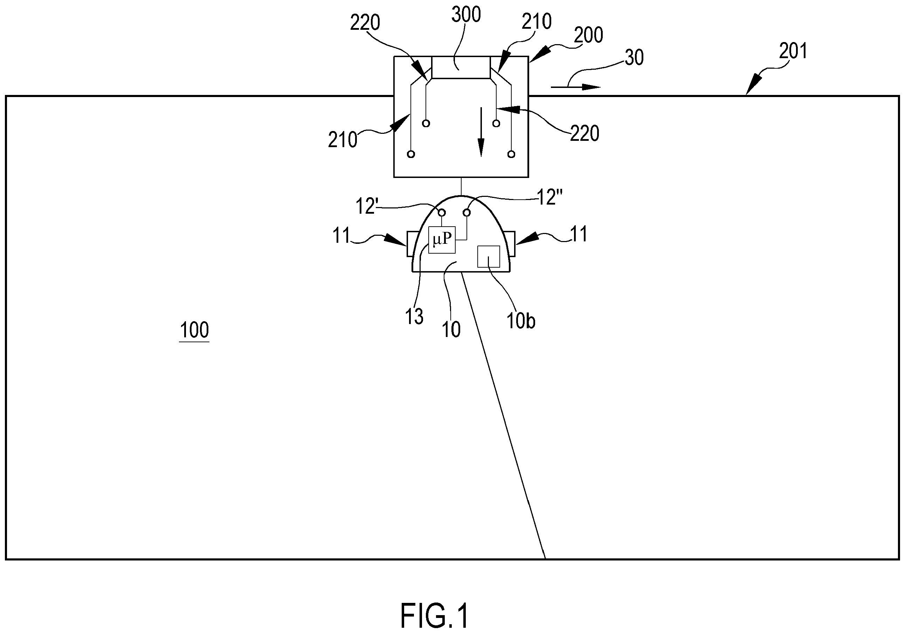

Figure 1 illustrates a schematic view of a control base and a self-propelled vehicle 10, in particular a robot, arranged at a given area of a ground or floor 100. Such area of the ground or floor 100 represents for example a floor or a ground, for example a grassy ground, on which to carry out a maintenance intervention. Such maintenance intervention is carried out by means of the self-propelled vehicle 10.

In detail, the self-propelled vehicle 10 is configured to move autonomously within the area of the ground or floor 100 to carry out the maintenance intervention of the aforesaid ground or floor.

Non-limiting examples of maintenance interventions that can be carried out by the self-propelled vehicle 10 described herein comprise: grass cutting, leaf collection, leaf blowing, fertilizing or distributing pesticides, floor washing, floor drying, floor scrubbing, floor disinfection.

The work area of the self-propelled vehicle is defined by a wire 201, which is arranged by an operator in a given position that ideally defines the perimeter of the area 100. In the embodiment depicted in figure 1, such a wire 201 is arranged to delimit an area of the ground or floor 100 of substantially rectangular shape. Preferably, but not limitedly, the wire 201 is coated with a layer of insulating material, for example silicone or PVC or rubber. Preferably, but not limitedly, such a wire 201 is a stranded wire.

The reference numeral 200 identifies a base 200 for controlling and/or charging a self-propelled vehicle 10. Such a base comprises a control unit 300, the operation of which will be better described below. The control unit 300 is operationally connected, in particular electrically connected, with a plurality of electrical conductors 210, 220 arranged respectively on a left and right side of a contact area and/or overlapping between the self-propelled vehicle 10 and the base 200. On such electrical conductors 210, 220, when in use, such a control unit 300 transmits an auxiliary signal, identified by reference numeral 40, which is used to carry out a fine (precise) positioning of the self-propelled vehicle 10 on the contact area and/or overlapping, so that the self-propelled vehicle 10 can charge its batteries.

The self-propelled vehicle 10 comprises a plurality of wheels or rollers 11, configured to allow the movement of the self-propelled vehicle 10 on the ground or floor 100. Of such a plurality of wheels or rollers, at least one is a drive wheel or roller.

The self-propelled vehicle 10 comprises at least one electromagnetic signal receiving element 12', 12" configured to receive, in use, a driving signal 30 of the electromagnetic type, transmitted through the wire 201 delimiting the ground or floor 100. Such a receiver element can for example comprise a coil of electrical wire configured to be capable of detecting an electromagnetic field variation at least in terms of intensity. The Applicant observes that in the embodiments depicted in the accompanying figures, the self-propelled vehicle 10 comprises a pair of electromagnetic field receiving elements 12', 12" preferably positioned, but not limitedly, in a symmetrical position with respect to a longitudinal axis of the self-propelled vehicle 10. In a particular and non-limiting embodiment, the electromagnetic field receiving elements 12', 12" are identical.

The at least one electromagnetic signal receiving element 12', 12" is intended to allow a polarity of an electromagnetic field transmitted by the wire 201 to be detected in accordance with a positional relationship assumed with respect to the wire 201, in particular in accordance with at least whether the wire 201 is on a first side (for example the left side) or on a second side (for example the right side) of the self-propelled vehicle 10.

The self-propelled vehicle 10 comprises at least one rechargeable battery 10b, and is configured to allow recharging the battery 10b when in correspondence with the base 200. The battery charging takes place by a transfer of electrical energy from the base 200 to the battery 10b.

An electric motor is electrically powered by the battery 10b and is mechanically connected with the wheels or rollers 11. In particular, the electrical power supply of the motor is of the selective type. This means that the electric motor is not always powered by the battery 10b but its power supply is determined by some specific operational conditions in which the self-propelled vehicle 10 is operating. For example, the motor is not powered when the self-propelled vehicle must remain stationary.

A data processing unit 13 is also present on board the self-propelled vehicle 10. Such a data processing unit 13 is electrically connected to the electromagnetic signal receiving element 12', 12", and is configured to extract a univocal coding from the driving signal 30, optionally a univocal binary coding from a main portion 30' of the driving signal 30 (or first portion) suited to cause an identification of a positional relationship between the self-propelled vehicle 10 and the wire 201 and/or an identification of a perimeter defined by the wire 201.

The data processing unit 13 is further configured to carry out an electronic determination of a distance instantaneously assumed by the self-propelled vehicle 10 with respect to the wire 201 according to said coding, optionally in accordance with said binary coding, and/or in accordance with a power with which the driving signal 30 is received on said at least one electromagnetic signal receiving element 12', 12".

Thus, the data processing unit 13, through the operational connection with the at least one electromagnetic signal receiving element 12', 12", and in particular through an operational connection with the pair of electromagnetic signal receiving elements 12', 12", is configured to electronically process the signal received through such at least one electromagnetic signal receiving element in order to determine a position of the wire 201 in relation to the self-propelled vehicle 10, and in particular if the wire 201 is on the left side or on the right side of the self-propelled vehicle 10.

The data processing unit 13 is also operationally connected with the motor of the self-propelled vehicle 10, so that it is possible to adjust the driving force imparted to the wheels or rollers 11, or so that it is possible to steer them, to make the self-propelled vehicle complete a given path within the perimeter delimited by the wire 201. Therefore, the data processing unit 13 is configured at least to manage an at least partially automatic control of the movimentation of the self-propelled vehicle 10 relative to the wire 201 along said path or perimeter.

The data processing unit 13 is electrically connected to the first and to the second electromagnetic signal receiving element 12', 12". More generally, the data processing unit 13 is operationally connected to the first and to the second electromagnetic signal receiving elements 12', 12".

In a preferred and non-limiting embodiment, the self-propelled vehicle 10 is configured to carry out a filtering of the driving signal 30, so that the subsequent electronic processing carried out by the data processing unit 13 is more effective. The self-propelled vehicle 10 therefore optionally comprises a conditioning circuit, operationally connected to said at least one electromagnetic signal receiving element 12', 12"; said conditioning circuit being configured to carry out a filtering of an undesired electromagnetic noise, and/or to perform an amplification of the driving signal 30 received through the at least one electromagnetic signal receiving element 12', 12". Such a conditioning circuit can be of hardware and/or software type, or be a mixed hardware and software circuit. Such a conditioning circuit can comprise, for example and not limitedly, a bandpass filter.

In an embodiment, the self-propelled vehicle 10 comprises a wireless receiver (not depicted in the accompanying figures) configured to establish a data communication channel with a wireless communication module 308 of the base 200. The purpose of the wireless receiver is to enable the data communication channel to be established when the self-propelled vehicle 10 is in correspondence with said base 200. In a non-limiting embodiment, such a wireless receiver operates according to Wi-Fi technology, thus according to the IEEE 802.11 protocol, but can also operate for example and not limitedly according to the Bluetooth ® protocol or according to a further standardized or known wireless communication protocol.

Returning again to the control unit 300, such a control unit 300 is configured to be electrically connected with at least one wire 201 delimiting the ground or floor 100 on which the self-propelled vehicle 10, when in use, carries out maintenance.

At the architectural level, the self-propelled vehicle 10 can therefore comprise: a navigation logic subsystem, comprising at least the data processing unit 13, to define the path that the self-propelled vehicle 10 must travel on the area of the ground or floor 100 delimited by the wire 201 when in use, a power subsystem, which comprises at least the motor and the battery 10b and which further comprises, optionally, impact and/or lifting sensors, and the two electromagnetic signal receiving elements 12', 12".

In particular, the impact sensors are operationally connected with the data processing unit 13 and are configured to cause a stop and/or rotation of the motor in the opposite direction with respect to that previously assumed, if they detect the impact of the self-propelled vehicle 10 with an obstacle. The lifting sensor, also operationally connected to the data processing unit 13, is configured to cause, for example, a stop of the grass cutting blades or more generally, to cause a stop or an impediment to start of the accessory employed by the self-propelled vehicle 10 to carry out maintenance of the ground or floor 100, when the self-propelled vehicle 10 is lifted from the ground or floor 100 by an external force, for example by an operator. Such a sensor therefore acts as a safety sensor. The presence of these elements determines a particular safety of use of the self-propelled vehicle 10.

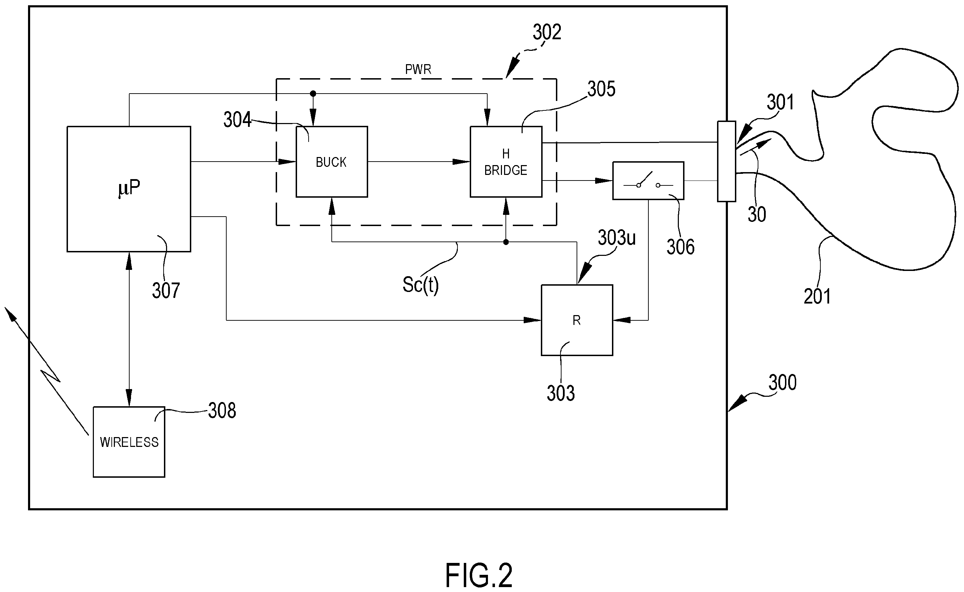

Figure 2 illustrates a detail of a specific embodiment of the circuit contained in the control unit 300. From figure 2 it can be seen that the control unit 300 comprises:

- at least one output 301 configured to be connected to the wire 201 and on which, when in use, a driving signal 30 is fed for the self-propelled vehicle 10,
- a power stage 302 connected to the output 301 and configured to feed the driving signal 30 on the output 301,
- a resistance measurement stage 303, connected with the output 301, configured to measure an electrical resistance R of the wire 201, in particular when the wire 201 is connected to the output 301.

The control unit 300 comprises an operational measurement configuration in which it is configured to vary, through the power stage 302, the voltage and/or current of the driving signal 30 according to the electrical resistance R measured by the resistance measurement stage 303.

In fact, the unintended variation of the resistance R of the wire 201 can cause an alteration of the intensity of the electromagnetic field radiated therefrom in the area of the ground or floor 100, and therefore can cause an alteration, in particular a worsening, of the precision and accuracy with which the self-propelled vehicle 10 is able to determine its position within the aforesaid area. In particular, it is observed that in given environments, in particular when humid, an increase in resistance R of the wire 201 can be a phenomenon that occurs with a certain frequency, due to the oxidation of the wire itself.

Therefore, a compensation of the variation of the resistance R of the wire 201 allows to restore the correct voltage and/or current of the driving signal 30 on the wire 201, and therefore allows to restore the correct level of electromagnetic field intensity within the area of the ground or floor 100. Accordingly, the precision and positioning accuracy of the self-propelled vehicle 10 are maintained.

For this reason, the assembly formed by the resistance measurement stage 303 and the power stage 302 is configured, and specifically designed, to maintain an intensity of the electromagnetic field B generated by the wire 201 constant as the electrical resistance R of the wire 201 varies.

The power module 302 is therefore designed to carry out (preferably, in an automatic manner) an adaptation of a power with which the driving signal 30 is fed on said wire 201.

The power adaptation takes place as a function of at least one external parameter, optionally in which the external parameter is part of the following list: ambient temperature, atmospheric pressure, ambient humidity, time of year, wire length, wire section, self-propelled vehicle model.

To do this, more in particular, the control unit 300 is configured to increase the voltage and/or the current of the driving signal 30 as the resistance R measured by the resistance measurement stage 303 increases, optionally to maintain an intensity of electromagnetic field B generated by the wire 201 constant as the electrical resistance R of the wire 201 varies (in particular as it increases). It is observed that the relationship that binds the intensity of the electromagnetic field B generated by the wire 201 with the resistance R of the wire follows the following law:

$$B \propto \frac{i}{r}; B \propto \frac{V}{Rr}$$

where V is the voltage [V], R is the resistance of the wire 201 [Ohm], r [m] is the measurement distance of the field B and [A] is the electrical current.

Therefore, the control signal $s_c(t)$ is intended to cause an increase in the voltage and/or the current of said driving signal 30 as the electrical resistance R of the wire 201 increases, to maintain an intensity of electromagnetic field B generated by the wire 201, when in use, constant as the electrical resistance R of the wire 201 varies. This contributes to ensuring that even with wires 201 that gradually deteriorate due to the environmental conditions in which they are exposed, the performance in terms of precision and positioning accuracy are hardly affected by this measure.

In the operational configuration, the control unit 300 is configured to vary, through the power stage 302, the voltage and/or current of the driving signal 30 according to the electrical resistance R measured by the resistance measurement stage 303, so that a current of predetermined value, in particular of predetermined average value, is maintained on said wire 201 at least temporarily as the measured electrical resistance R varies. In an embodiment, therefore, the power stage 302 acts as a constant current generator.

The control unit 300 comprises an operational power supply configuration, in which it is configured to carry out, through the power stage 302, a step of generating a driving signal 30 for the self-propelled vehicle 10, in which the generation step comprises a generation of at least one main portion 30' of the driving signal 30 suited to cause an identification of a positional relationship between the self-propelled vehicle 10 and the wire 201 and/or an identification of a perimeter defined by the wire 201. Such a generation step contributes to determining a control method of the self-propelled vehicle. In detail, such a generation step corresponds to a first generation step although, as will be better clarified in the following description portions, the control unit 300 can also be configured to carry out such a generation step as a second generation step, anticipated by a first generation step.

As will be better clarified in the following description portion, the first main portion 30' of the driving signal 30 is intended to allow a temporal tuning with the self-propelled vehicle 10. Such a first portion is therefore intended to allow determining the position of the self-propelled vehicle 10 with respect to the wire 201.

Optionally, in an embodiment, the control unit 300 is configured to carry out, through the power stage 302, a second generation step of the driving signal 30 for the self-propelled vehicle 10, in which the second generation step of the driving signal comprises a generation of the first main portion 30' of the driving signal 30 and comprises the generation of at least one auxiliary portion 30"-30''' of the driving signal 30. As previously anticipated, such a second step can - in at least one embodiment - become the first generation step, and in some cases the only generation step.

This means that in subsequent generations of the driving signal 30, the auxiliary portion 30"-30''' is not always necessarily present.

Thus, in a specific embodiment of the control unit, a control unit 300 is configured to be electrically connected with at least one wire 201 delimiting a ground or floor 100 on which, in use, the self-propelled vehicle 10 carries out maintenance, and the control unit 300 comprises: at least one output 301 configured to be connected with the wire 201 and on which a driving signal 30 for the self-propelled vehicle 10 is fed in use, a power stage 302 connected to the output 301 and configured to feed the driving signal 30 to the output 301, and the control unit 300 comprises a operational power supply configuration, in which it is configured to carry out, through the power stage 302, a first generation of a driving signal 30 for the self-propelled vehicle 10, in which the first generation comprises a generation of at least a main portion 30' of the driving signal 30 suited to cause an identification of a positional relationship between the self-propelled vehicle 10 and the wire 201 and/or an identification of a working perimeter for the self-propelled vehicle 10, where the working perimeter is defined by the wire 201; such a first generation of the driving signal comprises the generation of at least an auxiliary portion 30"-30‴ of the driving signal 30.

As can be observed in the diagram of figure 2, the resistance measurement stage 303 comprises an output 303u connected to the power stage 302 and on which, when in use, a control signal $s_c(t)$ passes, intended to cause a variation of the voltage and/or current of said driving signal 30 according to the electrical resistance R of the wire 201 measured by the resistance measurement stage 303. In an embodiment, the control signal $s_c(t)$ is a feedback signal that operates in feedback on the resistance measurement stage. Such a control signal can be an analogue type signal or a numerical type signal. In an embodiment, therefore, the control signal $s_c(t)$ has a voltage proportional to the resistance R of the wire 201.

The power stage 302 has a particular circuit configuration described below. In particular, the power stage 302 comprises a Buck converter 304 and an H-bridge 305. Preferably, said H-bridge 305 is a "full bridge" type bridge. As can be seen noted from the circuit diagram of figure 2, the H-bridge 305 is connected in series to the Buck 304, i.e., it has a power input fed in series from the power output of the Buck converter 304.

The H-bridge 305 is located downstream of the Buck converter 304, and in particular has an input that is directly fed by an output of the Buck converter 304. Thus, the Buck converter 304 powers an input of the H-bridge 305 with a control signal that determines the operation of the H-bridge 305. In use, the H-bridge 305 is activated simultaneously with the Buck converter 304, in particular by a signal from the data processing unit 307, in order to allow the polarity of the driving signal 30 to be adjusted appropriately. In an embodiment, such a control signal is a power signal.

The H-bridge 305 is typically provided with four power transistors, particularly four FET or MOS type transistors, which can be selectively powered independently of each other. Such FET or MOS are power transistors. The selective power supply of one or more of said transistors actually allows to exchange (invert) the polarity of the power signal provided by the output of the Buck converter 304. The data processing unit 307 of the control unit has a control output (in particular of the bus or multiwire type) intended to independently power each of the four transistors.

In an embodiment, the control unit 300 comprises a data processing unit 307 configured to cause a sending of a predetermined sequence, in particular a predetermined binary sequence, intended to cause a control of the H-bridge 305 for a polarity alteration of at least part of the said driving signal 30, thereby causing the output 301 to send a positive or negative half-wave (and thus the polarity instantly assumed by the driving signal 30).

At least one of the Buck converter 304 and the H-bridge 305 receives the control signal $s_c(t)$ from the output 303u of the resistance measurement stage 303. However, in the embodiment illustrated in figure 2, the control signal $s_c(t)$ from the output 303u of the resistance measurement stage 303 is provided in input to both the Buck converter 304 and the H-bridge 305.

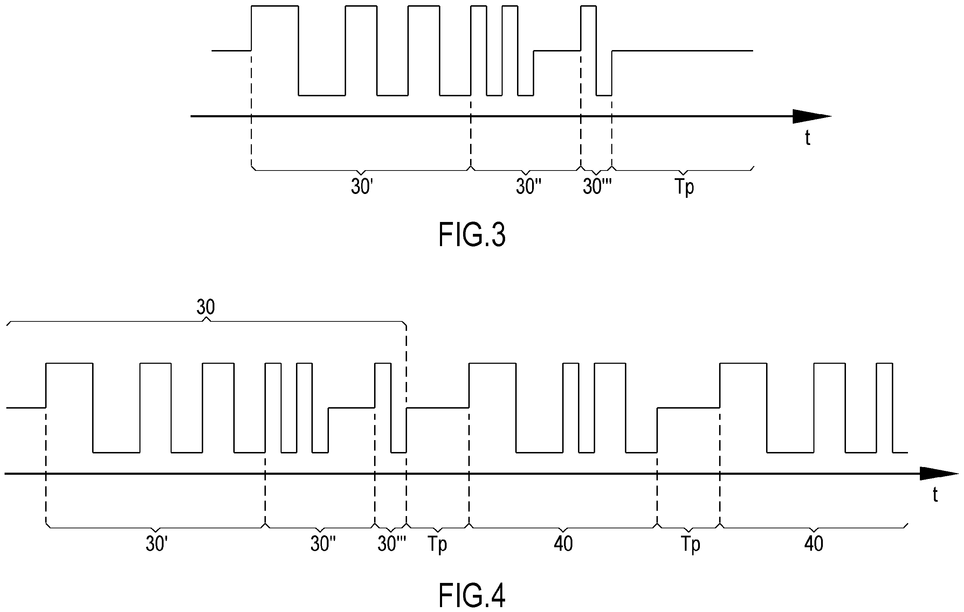

In particular, the purpose of the H-bridge 305 is to allow a temporary polarity inversion of the driving signal 30 that in use is fed on the wire 201. This aspect is important because, as can be observed in figures 3 and 4, the driving signal 30 is a time-varying signal, which has alternating positive and negative polarity, being in particular a square wave signal.

In the circuit configuration depicted in figure 2, the Buck converter 304 is configured to operate with a feedback control according to said electrical resistance R of the wire 201, and the control signal $s_c(t)$ is a feedback control signal.

In an embodiment, the measurement of the resistance R as described above is performed at the start of the self-propelled vehicle 10, or in any case at predetermined time intervals and, preferably not during the normal maintenance activity of the ground or floor 100, in order not to compromise, even for a few moments, the precision and positioning accuracy of the self-propelled vehicle 10.

The resistance measurement stage 303 can be powered off and/or operationally disconnected from the wire 201, when its intervention is not necessary. In an embodiment, the control unit 300 comprises a switching stage 306 located downstream of the power stage 302 and directly connected to the output 301; said switching stage 306 causing a switch-over between the operational measurement configuration and the operational power supply configuration.

The switch 306 is preferably controlled electronically by the data processing unit 307. Preferably, such a switching stage 306 is a solid-state switching stage.

Preferably, but not limitedly, the control unit 300 comprises a wireless communication module 308 configured to establish a data communication channel to a wireless receiver, in particular to a wireless receiver installed on said self-propelled vehicle 10. The purpose of the wireless communication module 308 is to enable the data communication channel to be established when the self-propelled vehicle 10 is in correspondence with said base 200. In a non-limiting embodiment, such a wireless communication module 308 operates according to Wi-Fi technology, thus according to the IEEE 802.11 protocol, but can also operate for example and not limitedly according to the Bluetooth® protocol, operating in particular with the same technology as the wireless module on board the self-propelled vehicle 10. Further wireless transmission technologies and/or protocols usable for the wireless communication module 308 and/or for the wireless module are for example and not limitedly ZigBee or WiMax.

Optionally, the control unit 300 can be configured to electronically detect when there is a transfer of electrical energy from a base 200 for controlling and/or charging the self-propelled vehicle 10 to the self-propelled vehicle 10, particularly for charging a battery 10b of the self-propelled vehicle 10.

The control unit 300, if provided with the wireless communication module 308, can be configured to activate (preferably, but not limitedly, in an automatic manner) the wireless communication module 308 and to establish the data communication channel only when the transfer of electrical energy is detected.

In a particular embodiment, the control unit 300 comprises an operational power supply configuration in which it is configured to perform, through the power stage 302:

- a first generation step of a driving signal 30 for the self-propelled vehicle 10, in which the first generation step comprises a generation of at least one main portion 30' of the driving signal 30 suited to cause an identification of a positional relationship between the self-propelled vehicle 10 and the wire 201 and/or an identification of a perimeter defined by the wire 201;
- a first transmission step, in which on the wire 201 placed in correspondence with the ground or floor 100 a driving signal 30 is fed for the self-propelled vehicle 10, and in which in the transmission step the wire 201 radiates said driving signal 30 through an electromagnetic field;
- a second step of generating a driving signal 30 for the self-propelled vehicle 10, in which the second generation step comprises a generation of the first main portion 30' of the driving signal 30 and comprises the generation of at least one auxiliary portion 30"-30‴ of the driving signal 30;
- a second transmission step, in which the driving signal 30 for the self-propelled vehicle 10 generated in the second transmission step is fed on the wire 201.

As is depicted in figure 3, in detail the first main portion 30' of the driving signal 30 in turn comprises a fixed tuning sub-portion formed by an alternation of positive and negative half-waves of a length equal to 3 bit times (Tb, hereinafter), then of a length equal to 2Tb and subsequently still equal to 2Tb, translatable into 0111 000 11 00 11 00.

In other words, the first main portion 30' of the driving signal 30, suited to cause an identification of a positional relationship between the self-propelled vehicle 10 and the wire 201 and/or an identification of a perimeter defined by the wire 201 and/or to determine the position of the self-propelled vehicle 10 in the area delimited by the wire 201, comprises its own univocal coding, optionally its own univocal binary coding.

The first main portion 30' of the driving signal also comprises a sub-portion suited to contain a useful data of predetermined length, for example and not limitedly equal to 8bit.

In an embodiment the second sub-portion is transmitted immediately following the first sub-portion. The second sub-portion comprises an alternation of positive and negative half-waves of a length equal to 1Tb.

The auxiliary portion 30"-30‴ of the driving signal 30 comprises a dummy byte 30". Such a dummy byte comprises a positive half-wave and a negative half-wave, each equal to 1Tb in length. Such a dummy byte is translatable as 1 0.

A pause Tp of predetermined length, in particular of length 4Tb, is introduced downstream of the dummy byte 30". In a preferred but non-limiting embodiment, the length of the pause Tp can be 50ms, or more generally be comprised in the range 30-300ms, or 40-200ms, or 45-100ms.

The auxiliary portion 30"-30‴ can in particular comprise at least one portion intended to cause the identification of at least a first base 200 for the self-propelled vehicle 10. Furthermore, the auxiliary portion 30"-30‴ can comprise at least one portion intended to differentially cause the identification of a second base 200 for the self-propelled vehicle. It is observed that the term "differential" is used here in order to make it clear that through the auxiliary portion it is possible to identify and distinguish the first base 200 from the second base 200.

Also, the control unit 300 can be configured to generate at least a first auxiliary signal 40 for controlling the self-propelled vehicle 10 when said self-propelled vehicle 10 is near the base 200. In a further and particular embodiment, the control unit 300 can be configured to generate at least a second auxiliary signal 40 for controlling the self-propelled vehicle 10 when the self-propelled vehicle 10 is near the base 200.

Where the first and/or the second auxiliary signal is generated, the control unit 300 is configured to transmit said at least a first auxiliary signal 40 on at least a first pair of conductors 210 positioned within the base 200, and optionally can be configured to transmit the first and the second auxiliary signal 40 on at least a first pair of conductors 210 positioned within the base 200, or optionally can be configured to transmit the first and the second auxiliary signal 40 on at least one of a first pair of conductors 210 and a second pair of conductors 220 positioned within the base 200.

The diagram of figure 4 illustrates a signal ideally received by the self-propelled vehicle 10, which in addition to comprising the signal of figure 3, also has a first auxiliary signal 40 and a second auxiliary signal 40, each translatable with the sequence 111000101100 and 111000110010. Between them, the first and the second auxiliary signal 40 are separated by a pause Tp of predetermined length, preferably equal to 4Tb.

The purpose of the first and/or the second auxiliary signal 40 is to optimize the positioning of the self-propelled vehicle 10 on the base 200 so that the transfer of energy to the battery 10b takes place as effectively as possible.

In an embodiment, the first and the second auxiliary signal 40 can come from two different bases 200. In particular, such a first and second auxiliary signal 40 can come from a first base positioned in a first position within the ground or floor area delimited by the wire 201 and from a second base positioned in a second position within a further ground or floor area delimited by the wire 201 or by further wires 201. In other words, there may be a configuration in which two bases 200 can be connected to a single wire 201.

Some details of the base 200 for controlling and/or charging the self-propelled vehicle 10 are provided below.

The base 200 comprises at least one pair of power contacts suited to transfer electrical energy towards the supply battery 10b of said self-propelled vehicle 10.

Preferably, the base 200 comprises a connector suited to allow the removable connection of said wire 201. This makes it possible to easily replace the wire 201 with further wires of different length and/or cross-section and/or features, and also allows an easy replacement of the wire if it is damaged. Preferably, such a connector substantially corresponds to the output 301 depicted in figure 2. Therefore, the connector can comprise at least one terminal electrically connected with the control unit 300.

The Applicant observes that the plurality of electrical conductors 210, 220 comprise at least a first pair of conductors 210 configured to transmit the auxiliary signal 40 for controlling the self-propelled vehicle 10 when near the base. Preferably, however, the plurality of electrical conductors 210, 220 comprise a second pair of conductors 220 configured to transmit the auxiliary signal 40 for controlling the self-propelled vehicle 10 when near the base. Such an auxiliary signal advantageously allows a particular positioning accuracy of the self-propelled vehicle 10 on the base.

In order to optimize the positioning of the self-propelled vehicle 10 with respect to the base 200, the first pair of conductors 210 has a greater length with respect to the length of the second pair of conductors 220 and/or the first pair of conductors 210 is oriented differently with respect to the second pair of conductors 220 and/or the first pair of conductors 210 is positioned at a different height with respect to the height at which the second pair of conductors 220 lies.

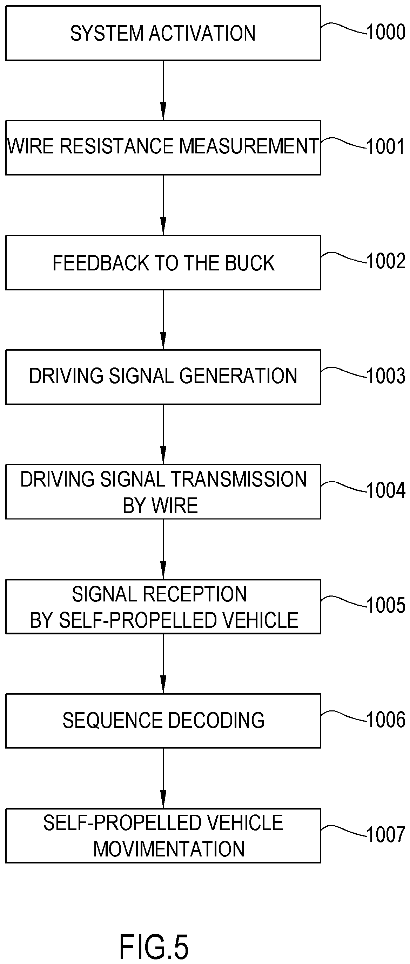

The control method of the self-propelled vehicle 10, which forms the object of the present disclosure, is described below with particular reference to the diagram of figure 5.

The block 1000 identifies a system activation step, which comprises a power supply of the control unit 300 of the base 200 and also comprises an activation of the self-propelled vehicle 10.

The method comprises a first step of generating a driving signal 30 for the self-propelled vehicle 10, in which the first generation step comprises a generation of at least one main portion 30' of the driving signal 30

suited to cause, when the driving signal 30 is received by the self-propelled vehicle 10:

- an identification of a perimeter defined by the wire 201, and/or
- a determination of the position of the self-propelled vehicle 10 in an area of said ground or floor 100 delimited by said wire 201.

The generation step of the driving signal 30 is identified by block 1003 of figure 5.

The method described herein also comprises at least a first transmission step, in which on the wire 201 placed in correspondence with the ground or floor 100 a driving signal 30 is fed for the self-propelled vehicle 10, and in which in the transmission step the wire 201 radiates said driving signal 30 through an electromagnetic field B. Such a transmission step is identified by block 1004 of figure 5. Obviously, the first transmission step temporarily follows the first generation step identified by block 1003.

The method further comprises a measurement step of the resistance R of the wire 201, and/or comprises a step of controlling a voltage and/or current of said driving signal 30, in which the voltage and/or current of the driving signal 30 is modified in relation to the resistance R of the wire 201. The measurement step of the resistance R of the wire 201 is represented by block 1001 of figure 5. The step of controlling the voltage and/or current of said driving signal 30 (feedback to the Buck) is represented by block 1002 of figure 5. This step of controlling the voltage and/or current of the driving signal 30 fed to the wire 201 corresponds to a step of altering the voltage and/or current value of the driving signal 30 fed to the wire 201. Such an alteration preferably takes place even if not limitedly in an automatic manner, under the control of the control unit 300.

In an embodiment, the measurement step of the resistance R of the wire 201 takes place before the first generation step of the driving signal 30 (block 1003) and before the first transmission step of said driving signal (block 1004).

The control method can also optionally comprise a second generation step of a driving signal 30 for the self-propelled vehicle 10, in which the second generation step comprises a generation of the first main portion 30' of the driving signal 30 and comprises the generation of at least an auxiliary portion 30"-30‴ of the driving signal 30.

The control method can also optionally comprise a second transmission step, in which the driving signal 30 for the self-propelled vehicle 10 generated in the second transmission step is fed to the wire 201.

A particular embodiment of the method object of the present disclosure firstly comprises a first generation step of a driving signal 30 for the self-propelled vehicle 10, in which the first generation step comprises a generation of at least one main portion 30' of the driving signal 30 suited to cause an identification of a positional relationship between the self-propelled vehicle 10 and the wire 201 and/or an identification of a perimeter defined by the wire 201. Such a particular embodiment of the method further comprises a second generation step of a driving signal 30 for the self-propelled vehicle 10, in which the second generation step comprises a generation of the first main portion 30' of the driving signal 30 and comprises the generation of at least one auxiliary portion 30"-30''' of the driving signal 30.

Alternatively, in the first generation step the method further comprises the generation of said auxiliary portion 30"-30'''.

Following the aforesaid first and second generation step, the method disclosed herein comprises:

- a first transmission step, in which on the wire 201 placed in correspondence with the ground or floor 100 said driving signal 30 is fed for the self-propelled vehicle 10 generated in the first transmission step,
- a second transmission step, in which the driving signal 30 for the self-propelled vehicle 10 generated in the second transmission step is fed on the wire 201.

As a result of the first transmission step, and (where present) as a result of the second transmission step, the wire 201 radiates in the area of the floor or ground 100 a driving signal 30 in the form of an electromagnetic field, which is directed towards a plurality of different directions simultaneously and which therefore also reaches the self-propelled vehicle 10.

As already mentioned above, the auxiliary portion 30"-30''' comprises at least one of the sub-portions of the following list:

- a sub-portion 30" of driving signal 30 comprising useful data, for the control of said self-propelled vehicle 10;
- a sub-portion 30''' of driving signal 30 comprising at least one dummy datum.

The Applicant in particular observes that the first transmission step comprises, optionally the first and the second transmission step comprise, at least a temporary inversion of the polarity of the driving signal 30, said polarity inversion being carried out by the H-bridge 305 electrically connected to the wire 201.

The polarity inversion criterion of the driving signal is determined by the data processing unit 307 of the control unit 300, which conveniently stores a predefined sequence, in particular a predefined binary sequence, and commands the H-bridge through an activation of its power transistors so that the polarity inversion is carried out, and therefore the above-mentioned positive and negative half-waves can be generated.

The control method described herein also comprises the activation of a command intended to release the self-propelled vehicle 10 from the base 200 for controlling and/or charging a self-propelled vehicle 10, and the measurement step of the resistance R of the wire 201 (block 1001) and the step of controlling the voltage and/or current of said driving signal 30 (block 1002) are carried out in correspondence with each activation of said command, in particular being carried out before the activation of said command.

As schematically depicted in figure 4, the method comprises a step of stopping the first transmission step, in which for a given temporal spacing Tp, no driving signal 30 is transmitted on the wire 201.

Subsequent to the aforesaid temporal spacing Tp, the method comprises a step of generating at least a first auxiliary signal 40 for controlling the self-propelled vehicle 10 when near the base 200. In particular, the Applicant observes that the generation of the first auxiliary signal 40 takes place immediately after the temporal spacing Tp. Furthermore, the method can comprise a generation step of at least a second auxiliary signal 40 for controlling the self-propelled vehicle 10 when near the base 200. The generation is followed by a transmission of the first auxiliary signal 40 and, where generated, of the second auxiliary signal 40. The transmission of the first and (optionally) second auxiliary signal 40 follows the temporal spacing Tp.

In particular, the transmission of the first auxiliary signal 40 takes place from a first base, while the transmission of the second auxiliary signal 40 can take place either from the same base that transmitted the first auxiliary signal 40, or from a second base, different from the first.

Alternatively, the transmission of the first auxiliary signal 40 and/or the second auxiliary signal 40 takes place on at least a first conductor 210 of the base 200 and the transmission of the second auxiliary signal 40 takes place on a second conductor 220 of the base 200.

The Buck converter 304 is activated at least during the first generation step of the driving signal 30 and/or during the first transmission step of the driving signal 30. When the second generation step of the driving signal 30 is present, and the second transmission step of the driving signal, the Buck converter 304 is also activated for the duration of at least one of these two steps.

The step of controlling a voltage and/or current of the driving signal 30 (block 1002, figure 5) comprises the transmission of the control signal $s_c(t)$, which is a feedback control signal. Such a control signal $s_c(t)$ is transmitted from the output 303u of the resistance measurement stage 303, electrically connected to said wire 201, to the Buck converter 304.

In an embodiment, the step of controlling the voltage and/or current of the driving signal 30 (block 1002, figure 5) comprises the transmission of the control signal $s_c(t)$ to the H-bridge 305; in particular, an output line powered by the output 303u of the resistance measurement stage 303 feeds both the Buck converter 304 and the H-bridge 305 in parallel.

Block 1005 of figure 5 identifies a reception step of the driving signal from the self-propelled vehicle 10. Such a reception step in particular comprises a reception of the driving signal 30 on the at least one electromagnetic signal receiving element 12', 12".

The sequence of positive and negative half-waves, possibly filtered downstream of the electromagnetic signal receiving elements 12', 12" is decoded by the data processing unit 13 of the self-propelled vehicle 10, and therefore the sequence of 1 and 0 of the driving signal 30 is decoded (block 1006) which allows the self-propelled vehicle 10 to determine its own position and allows to cause a movimentation of the self-propelled vehicle (block 1007) through an appropriate activation of its motor. The control method comprises a step of electronically determining a distance instantaneously assumed by the self-propelled vehicle 10 with respect to the wire 201 according to a power and/or electromagnetic field intensity with which the driving signal 30 is received by the self-propelled vehicle 10.

It has already been said above that the first portion, or main portion 30' of the driving signal 30, suited to cause an identification of a positional relationship between the self-propelled vehicle 10 and the wire 201 and/or an identification of a perimeter defined by the wire 201 and/or to determine the position of the self-propelled vehicle 10 in the area delimited by the wire 201, comprises its own univocal coding, optionally its own univocal binary coding. Thus, the reception step of the driving signal 30 on the at least one electromagnetic signal receiving element 12', 12" of the self-propelled vehicle 10 (block 1005, figure 5) is followed by an extraction step of said coding, in particular being followed by an extraction step of the binary coding. The decoding step of the sequence identified by block 1006 of figure 5 thus comprises a step of electronic determination of a distance instantaneously assumed by the self-propelled vehicle 10 with respect to the wire 201 according to said coding, optionally in accordance with said binary coding, and/or in accordance with a power with which the driving signal 30 is received on said electromagnetic signal receiving element 12', 12".

When the self-propelled vehicle 10 by means of its own data processing unit 13 detects a low charge state, due to the electromagnetic field radiated by the wire 201 it determines its position in the area of the ground or floor 100 surrounded by the wire 201 and autonomously directs towards the base 200. The control method comprises a step of approximating the self-propelled vehicle 10 to the base 200 and comprises a step of transferring electrical energy from the base 200 to the self-propelled vehicle 10 for charging a battery 10b of the self-propelled vehicle 10.

Optionally, the control method comprises the activation of a wireless communication module 308 positioned on said base 200 and comprises the establishment of a wireless communication channel between said wireless communication module 308 and a wireless receiver module present on said self-propelled vehicle 10.

Preferably, although not limitedly, the activation of the wireless communication module 308 occurs upon the transfer of electrical energy from the base 200 to the self-propelled vehicle. This allows to reduce to a minimum the number and extent of the electromagnetic fields in the area of the ground or floor 100 where the self-propelled vehicle 10 is normally intended to operate. The positioning of such self-propelled vehicle 10 is therefore improved, since the reception of the electromagnetic field radiated by the wire 201 is not influenced by the electromagnetic field of the waves of the wireless modules.

A computer program is also described in accordance with the present disclosure. Such a computer program is intended to be run by the data processing unit 307 of the control unit 300 and is stored on a predefined memory medium. The software program described herein comprises portions of software code which, when run, cause certain steps of the control method mentioned above to be executed. The portions of software code can be described in any known programming language and can be grouped into routines.

In particular, such a computer program comprises portions of software code which, when run, cause the execution of:

- a first step of generating a driving signal 30 for the self-propelled vehicle 10, in which the first generation step comprises a generation of at least one main portion 30' of the driving signal 30 suited to cause, when the driving signal 30 is received by the self-propelled vehicle 10, an identification of a perimeter defined by the wire 201 and/or a determination of the position of the self-propelled vehicle 10 in an area of said ground or floor 100 delimited by said wire 201;

- at least a first transmission step, in which on a wire 201 placed in correspondence with the ground or floor 100 a driving signal 30 is fed for the self-propelled vehicle 10, and in which in the transmission step the wire 201 radiates said driving signal 30 through an electromagnetic field;

- a measurement step of the resistance R of the wire 201;

- a step of controlling a voltage and/or current of said driving signal 30, in which the voltage and/or the current of the driving signal 30 is modified in relation to the resistance R of the wire 201.

Preferably, the computer program is written such that the measurement step of the resistance R of the wire 201, and/or the step of controlling the voltage and/or current of said driving signal 30, takes place before the transmission step. This allows an extremely effective preventive control of the status of the wire 201 and helps prevent malfunctions, in particular incorrect positioning, of the self-propelled vehicle 10 within the area of the ground or floor 100 delimited by the wire 201.

The program described herein is further configured to cause the activation of a resistance measurement stage 303 for the execution of the measurement step of the resistance R of the wire 201, and/or for the execution of the step of controlling the voltage and/or current of said driving signal 30.

Furthermore, the computer program can be written so as to cause the execution of a second generation step of a driving signal 30 for the self-propelled vehicle 10, in which the second generation step comprises a generation of the first portion 30' of the driving signal 30 and comprises the generation of at least one auxiliary portion 30"-30''' of the driving signal 30. Subsequent to such a second generation step, the program preferably immediately causes a second transmission step, in which the driving signal 30 for the self-propelled vehicle 10 generated in the second transmission step is fed on the wire 201.

In particular, a preferred embodiment of the program described herein comprises portions of software code which, when run, cause the execution of:

- a first step of generating a driving signal 30 for the self-propelled vehicle 10, in which the first generation step comprises a generation of at least one main portion 30' of the driving signal 30 suited to cause an identification of a positional relationship between the self-propelled vehicle 10 and the wire 201 and/or an identification of a perimeter defined by the wire 201;
- a second generation step of a driving signal 30 for the self-propelled vehicle 10, in which the second generation step comprises a generation of the first portion, or main portion 30' of the driving signal 30 and comprises the generation of at least one auxiliary portion 30"-30''' of the driving signal 30;
- a first transmission step, in which on a wire 201 placed in correspondence with the ground or floor 100 said driving signal 30 is fed for the self-propelled vehicle 10 generated in the first transmission step,
- a second transmission step, in which the driving signal 30 for the self-propelled vehicle 10 generated in the second transmission step is fed on the wire 201;

and in which in the first and the second transmission step the wire 201 radiates said driving signal 30 through an electromagnetic field to the self-propelled vehicle 10.

The computer program comprising portions of software code which, when run, cause the activation of a data processing unit 307 of a control unit 300, for sending a predetermined sequence, in particular a predetermined binary sequence, intended to cause a control of an H-bridge 305 for a polarity alteration of at least part of said driving signal 30.

With the program described herein, an activation is obtained, in particular a sending to the self-propelled vehicle 10, of a command intended to release the self-propelled vehicle 10 from a base 200 for controlling and/or charging a self-propelled vehicle 10.

The program described herein allows a measurement of the resistance R of the wire 201 and a step of controlling the voltage and/or current of said driving signal 30 in correspondence with each activation of said command and/or in correspondence with each sending of said command to the self-propelled vehicle 10.

The program described herein, in a specific and non-limiting embodiment, causes a stop of the first transmission step, as a result of which, for a given temporal spacing Tp, no driving signal 30 is transmitted on the wire 201.

The program described herein allows the generation of at least a first auxiliary signal 40 for controlling the self-propelled vehicle 10 when near the base 200 and/or a generation of at least a second auxiliary signal 40 for controlling the self-propelled vehicle 10 when near the base 200.

Said program also immediately causes a transmission of said first auxiliary signal 40 and/or said second auxiliary signal 40 on at least a first conductor 210 of the base 200, optionally so that the transmission of said first auxiliary signal 40 takes place on the first conductor 210 of the base 200 and so that the transmission of said second auxiliary signal 40 takes place on a second conductor 220 of the base 200.

To carry out the aforementioned transmission and generation, the program causes the activation of the Buck converter 304 at least during the first generation step of the driving signal 30, optionally during the first and second generation step of the driving signal 30. Such an activation is in particular an electrical activation and comprises sending a control signal capable of selectively driving the transistors present inside the Buck converter 304. Therefore, the computer program determines which of the various transistors of the Buck converter 304 are to be activated, more precisely to be put into operation, for the transmission and generation mentioned above.

In particular, to this end, the computer program, by sending an appropriate control signal, causes the activation of the H-bridge 305 and a control of the H-bridge 305 for a regulation of a polarity of the driving signal 30. In the preferred embodiment described herein, the activation of the H-bridge 305 is simultaneous with the activation of said Buck converter 304.

During the control of a voltage and/or current of said driving signal 30, the program described herein causes the transmission of a control signal $s_c(t)$, which is transmitted from an output 303u of the resistance measurement stage 303 electrically connected to said wire 201 to the Buck converter 304 and/or to said H-bridge 305, so that said control signal $s_c(t)$ acts as a feedback signal.

In an embodiment, the computer program that is run by the data processing unit 300 also controls a transfer of electrical energy from the base 200 to the self-propelled vehicle 10 for charging a battery 10b when the self-propelled vehicle 10 is substantially in correspondence with the base 200.

Where present, the computer program causes the activation of a wireless communication module 308 positioned on the base 200, and comprises the establishment of a wireless communication channel between said wireless communication module 308 and a wireless receiver module present on the self-propelled vehicle 10.

During the first transmission step, optionally during the first and the second transmission step, the computer program controls the H-bridge 305 to allow at least a temporary inversion of the polarity of the driving signal 30. In particular, by sending a control command, it causes a selective activation of at least one transistor, in particular a FET or MOS transistor, of the H-bridge 305. More specifically, the computer program causes the activation of a data processing unit 307 of a control unit 300, for sending a predetermined sequence, in particular a predetermined binary sequence, intended to cause a control of an H-bridge 305 for a polarity alteration of at least part of said driving signal 30, in which optionally said predetermined sequence, in particular said predetermined binary sequence, determines and/or is the inversion criterion.

Finally, the Applicant observes that a specific embodiment of the computer program, which is intended to allow the control of the self-propelled vehicle, comprises portions of software code which, when run, cause:

- a first step of generating a driving signal 30 for the self-propelled vehicle 10, in which the first generation step comprises a generation of at least one main portion 30' of the driving signal 30 suited to cause, when the driving signal 30 is received by the self-propelled vehicle 10, an identification of a perimeter defined by the wire 201 and/or a determination of the position of the self-propelled vehicle 10 in an area of said ground or floor 100 delimited by the wire 201, and in which the first generation step of the driving signal comprises the generation of at least one auxiliary portion 30"-30‴ of the driving signal 30;
- at least a first transmission step, in which on the wire 201 placed in correspondence with the ground or floor 100 the driving signal 30 is fed for the self-propelled vehicle 10, and in which in the transmission step the wire 201 radiates said driving signal 30 through an electromagnetic field.

Optionally, said computer program can comprise portions of software code which, when run, cause the execution of a further step of generating a driving signal 30 for the self-propelled vehicle 10, in which the further generation step comprises a generation of at least one main portion 30' of driving signal 30 suited to cause an identification of a positional relationship between the self-propelled vehicle 10 and the wire 201 and/or an identification of a working perimeter for the self-propelled vehicle 10, said perimeter being defined by the wire 201, and can comprise portions of software code which, when run, cause the execution of a further transmission step, in which on the wire 201 placed in correspondence with the ground or floor 100 the driving signal 30 is fed for the self-propelled vehicle 10 generated in the further generation step, and in which in the further transmission step the wire 201 radiates said driving signal 30 through an electromagnetic field.

Clearly, also this latter embodiment can comprise portions of software code intended to cause the execution of a measurement step of the resistance R of the wire 201 and a control of a voltage and/or current of said driving signal 30, in which the voltage and/or current of the driving signal 30 is modified in relation to the resistance R of the wire 201.

The Applicant observes that the base 200 and the wire 201, being in principle disconnectable from each other, can be sold separately or, alternatively, in a kit.

Also, a more complete kit can comprise, in addition to the base 200 and the wire 201, also a self-propelled vehicle 10 such as the one described herein.

## Claims

1. Control unit (300) for controlling a self-propelled vehicle (10), wherein the control unit (300) is configured to be electrically connected with at least one wire (201) delimiting a ground or a floor (100) on which the self-propelled vehicle (10), when in use, carries out maintenance,

   said control unit (300) comprising:

   - at least one output (301) configured to be connected to the wire (201) and on which, when in use, a driving signal (30) is fed for the self-propelled vehicle (10),
   - a power stage (302) connected to the output (301) and configured to feed the driving signal (30) on the output (301),
   - a resistance measurement stage (303), connected to the output (301), configured to measure an electrical resistance (R) of the wire (201) when connected to the output (301),

   in an operational measurement configuration the control unit (300) being configured to vary, through the power stage (302), the voltage and/or the current of the driving signal (30) according to the electrical resistance (R) measured by the resistance measurement stage (303), in an operational power supply configuration the control unit (300) being configured to perform, through the power stage (302), at least one generation of a driving signal (30) for the self-propelled vehicle (10).

2. Control unit according to claim 1, wherein said resistance measurement stage (303) comprises an output (303u), connected to the power stage (302) and on which, when in use, a control signal ($s_c(t)$) passes, intended to cause a variation of the voltage and/or the current of said driving signal (30) according to the electrical resistance (R) of the wire (201) measured by the resistance measurement stage (303) e/o

wherein the power stage (302) acts as a generator of constant current and/or

wherein the assembly formed by the resistance measurement stage (303) and the power stage (302) is configured to maintain an intensity of the electromagnetic field (B) generated by the wire (201) constant as the electrical resistance (R) of the wire (201) varies and/or

wherein the control unit is configured to increase the voltage and/or the current of the driving signal (30) with the increase of the resistance (R) measured by the resistance measurement stage (303), optionally to maintain an intensity of the electromagnetic field (B) generated by the wire (201) at least temporarily constant as the electrical resistance (R) of the wire (201) varies, and/or

wherein the control signal ($s_c(t)$) is intended to cause an increase in the voltage and/or the current of said driving signal (30) as the electrical resistance (R) of the wire (201) increases, optionally to maintain an intensity of electromagnetic field (B) generated by the wire (201), when in use, at least temporarily constant as the electrical resistance (R) of the wire (201) varies and/or

wherein, in said operational power supply configuration, the control unit (300) is configured to produce, through the power stage (302), at least one generation of at least one main portion (30') of driving signal (30), suited to cause an identification of a positional relationship between the self-propelled vehicle (10) and the wire (201) and/or an identification of a working perimeter for the self-propelled vehicle (10), said working perimeter being defined by the wire (201) and/or wherein the control unit comprises a switching stage (306) located downstream of the power stage (302) and directly connected to the output (301), said switching stage (306) causing a switch-over between the operational measurement configuration and the operational power supply configuration, and wherein the switching stage (306) is configured to operationally disconnect the resistance measurement stage (303) from the wire (201), at least when the control unit (300) is in the operational power supply configuration.

3.  Control unit according to claim 1 or to claim 2, wherein the power stage (302) comprises a Buck converter (304) and an H-bridge (305), wherein the Buck converter (304) feeds an input (305) of the H-bridge with a control signal and wherein at least one of the Buck converter (304) and the H-bridge (305) receives the control signal ($s_c(t)$) from the output (303u) of the resistance measurement stage (303),
    optionally wherein the H-bridge (305) is configured at least to cause a temporary polarity inversion of the driving signal (30) in use fed on the wire (201) and/or
    optionally wherein said Buck converter (304) is configured to operate with a feedback control according to the electrical resistance (R) of the wire (201) and the control signal ($s_c(t)$) is a feedback control signal.

4.  Base (200) for controlling and/or charging a self-propelled vehicle (10), comprising:

    - at least one power contact capable of transferring electrical energy to a power supply battery of a self-propelled vehicle (10) and
    - a control unit (300), said control unit being in accordance with any one of the claims from 1 to 3.

5.  Control method for a self-propelled vehicle (10) configured to carry out maintenance on a ground or a floor (100), said method comprising:

    - at least one generation step of a driving signal (30) for the self-propelled vehicle (10), wherein the generation step comprises a generation of at least one main portion (30') of driving signal (30) suited to cause, when the driving signal (30) is received by the self-propelled vehicle (10), an identification of a perimeter defined by the wire (201) and/or a determination of the position of the self-propelled vehicle (10) in an area of said ground or said floor (100) delimited by said wire (201),
    - at least one transmission step, wherein a driving signal (30) for the self-propelled vehicle (10) is fed on a wire (201) placed in correspondence of the ground or the floor (100), in the transmission step the wire (201) radiating said driving signal (30) through an electromagnetic field,
    - a measurement step of the resistance (R) of the wire (201),
    - a step of controlling a voltage and/or a current of said driving signal (30), wherein the voltage and/or the current of the driving signal (30) is modified in relation to the resistance (R) of the wire (201).

6.  Method according to claim 5, wherein the execution of the measurement step of the resistance (R) of the wire (201) and/or of the step of controlling the voltage and/or the current of said driving signal (30) occurs before the transmission step and wherein the control method comprises a step of electronic determination of a distance instantaneously taken by the self-propelled vehicle (10) with respect to the wire (201) according to an electromagnetic field strength and/or intensity with which the driving signal (30) is received by the self-propelled vehicle (10) and/or

wherein said method comprises the activation of a command intended to release the self-propelled vehicle (10) from a base (200) for controlling and/or charging a self-propelled vehicle (10), wherein the measurement step of the resistance (R) of the wire (201) and the step of controlling the voltage and/or current of said driving signal (30) are performed at each activation of said command.

7. Method according to claim 5 or to claim 6, wherein the measurement step of the resistance (R) of the wire (201) is carried out by a resistance measurement stage (303) connected to the wire (201) and comprises the transmission of a control signal ($s_c(t)$) to cause a variation of the voltage and/or the current of the driving signal (30) according to the electrical resistance (R) of the wire (201) measured by the resistance measurement stage (303),

optionally wherein the step of controlling the voltage and/or the current of the driving signal (30) comprises an increase of the voltage and/or the current of the driving signal (30) as the resistance (R) of the wire (201) increases, optionally to maintain an intensity of the electromagnetic field (B) generated by the wire (201) at least temporarily constant as the electrical resistance (R) of the wire (201) varies, and/or
optionally wherein the method, in the step of controlling the voltage and/or the current of the driving signal (30), comprises a step of increasing the voltage and/or the current of said driving signal (30) as the electrical resistance (R) of the wire (201) increases, optionally to maintain an intensity of the electromagnetic field (B) generated in use by the wire (201) at least temporarily constant as the electrical resistance (R) of the wire (201) varies, said increase being caused by the control signal ($s_c(t)$).

8. Method according to any one of claims from 5 to 7, comprising the activation of a Buck converter (304) at least during the first generation step of the driving signal (30), wherein the method comprises the activation of an H-bridge (305) for a polarity adjustment of said driving signal (305), the activation of the Buck converter (304) being simultaneous to the activation of the H-bridge (305).

9. Method according to any one of the claims from 5 to 8, comprising a reception step of the driving signal (30) on at least one electromagnetic signals receiving element (12', 12") of the self-propelled vehicle (10), wherein the driving signal (30) comprises at least a main portion (30') suited to cause an identification of a positional relationship between the self-propelled vehicle (10) and the wire (201) and/or an identification of a perimeter defined by the wire (201), wherein the main portion (30') suited to cause an identification of a positional relationship between the self-propelled vehicle (10) and the wire (201) and/or an identification of a perimeter defined by the wire (201) is configured and specifically intended to allow determining a position assumed by the self-propelled vehicle (10) on said ground or said floor (100) and said main portion (30') comprises its own unique coding, optionally its own unique binary coding, and wherein the reception step of the driving signal (30) on the at least one electromagnetic signals receiving element (12', 12") of the self-propelled vehicle (10) is followed by a step of extracting said coding, optionally by a step of extracting the binary coding, and by an electronic determination step of a distance instantaneously assumed by the self-propelled vehicle (10) with respect to the wire (201) according to said coding, optionally according to said binary coding, and/or according to a power and/or according to an electromagnetic field intensity with which the driving signal (30) is received on said electromagnetic signals receiving element (12', 12").

10. Control unit (300) for controlling a self-propelled vehicle (10), wherein the control unit (300) is configured to be electrically connected with at least one wire (201) delimiting a ground or a floor (100) on which the self-propelled vehicle (10), when in use, carries out maintenance,

said control unit (300) comprising:

- at least one output (301) configured to be connected to the wire (201) and on which, when in use, a driving signal (30) is fed for the self-propelled vehicle (10),
- a power stage (302) connected to the output (301) and configured to feed the driving signal (30) on the output (301),

in an operational power supply configuration the control unit (300) being configured to produce, through the power stage (302), at least a first generation of a driving signal (30) for the self-propelled vehicle (10),
wherein the first generation of a driving signal comprises a generation of at least one main portion (30') of driving signal (30) suited to cause an identification of a positional relationship between the self-propelled vehicle (10) and the wire (201) and/or an identification of a working perimeter for the self-propelled vehicle (10), said working perimeter being defined by the wire (201),

wherein the first generation of the driving signal comprises the generation of at least one auxiliary portion (30", 30‴) of the driving signal (30).

11. Control unit according to claim 10, said control unit (300), in the power supply operational configuration, being configured to perform, through the power stage (302), a further generation of a driving signal (30) for the self-propelled vehicle (10), wherein the further generation comprises a generation of at least one main portion (30') of driving signal (30) suited to cause an identification of a positional relationship between the self-propelled vehicle (10) and the wire (201) and/or an identification of a working perimeter for the self-propelled vehicle (10), said working perimeter being defined by the wire (201) and/or

wherein the auxiliary portion (30", 30‴) comprises at least one of the sub-portions of the following list:

- a sub-portion (30") of driving signal (30) comprising useful data, for the control of said self-propelled vehicle (10);
- a sub-portion (30‴) of driving signal (30) comprising at least one dummy datum and/or

wherein the auxiliary portion (30", 30‴) comprises at least one portion of temporal spacing (Tp) signal with respect to further transmissions of driving signals (30), said portion of temporal spacing (Tp) signal not carrying useful data for driving said self-propelled vehicle and/or having a substantially null mean value, and/or wherein said control unit (300), in the power supply operational configuration, is configured to perform a transmission of the driving signal (30) on the wire (201) following the first generation of the driving signal (30), optionally following the first and the further generation of the driving signal (30), and the control unit (300) is configured to stop the transmission of the driving signal (30) on the wire (201) for a certain temporal spacing (Tp), wherein no driving signal (30) is transmitted on the wire (201), and/or wherein said control unit is configured to alternately execute a first generation of the driving signal (30) and a further generation of the driving signal (30) and/or wherein, in the further generation of the driving signal (30), the driving signal does not comprise said auxiliary portion (30", 30‴) and/or

wherein the main portion (30') suited to cause an identification of a positional relationship between the self-propelled vehicle (10) and the wire (201) and/or an identification of a perimeter defined by the wire (201) comprises its own unique coding, optionally its own unique binary coding, and/or

wherein the control unit comprises a resistance measurement stage (303), connected with the output (301), configured to measure an electrical resistance (R) of the wire (201) when connected to the output (301), and in an operational measurement configuration the control unit is configured to vary, through the power stage (302), the voltage and/or the current of the driving signal (30) according to the electrical resistance (R) measured by the resistance measurement stage (303),

optionally wherein:

- the assembly formed by the resistance measurement stage (303) and the power stage (302) is configured to maintain an intensity of an electromagnetic field (B) generated by the wire (201) constant as the electrical resistance (R) of the wire (201) varies and/or
- the control unit (300) is configured to increase the voltage and/or the current of the driving signal (30) as the resistance (R) measured by the resistance measurement stage (303) increases, optionally to maintain an intensity of the electromagnetic field (B) generated by the wire (201) at least temporarily constant as the electrical resistance (R) of the wire (201) varies, and/or
- the control unit (300) in the operational measurement configuration is configured to vary, through the power stage (302), the voltage and/or the current of the driving signal (30) according to the electrical resistance (R) measured by the resistance measurement stage (303), so that a current of a predetermined value, in particular of a predetermined average value, is maintained on said wire (201) at least temporarily as the measured electrical resistance (R) varies.

12. Base (200) for controlling and/or charging a self-propelled vehicle (10), comprising:

- at least one power contact suited to transfer electrical energy towards a supply battery of a self-propelled vehicle (10) and
- a control unit (300), said control unit being in accordance with claim 10 or claim 11.

13. Control method for a self-propelled vehicle (10) configured to carry out maintenance on a ground or a floor (100), said method comprising:

- at least a first generation step of a driving signal (30) for the self-propelled vehicle (10), wherein the first generation step comprises a generation of at least one main portion (30') of a driving signal (30) suited to cause, when the driving signal (30) is received by the self-propelled vehicle (10), an identification of a perimeter defined by the wire (201) and/or a determination of the position of the self-propelled vehicle (10) in an area of said ground or said floor (100) delimited by said wire (201), the first generation step of the driving signal comprising the generation of at least one auxiliary portion (30", 30''') of the driving signal (30),

- at least a first transmission step, wherein on the wire (201) placed in correspondence of the ground or the floor (100) the driving signal (30) is fed for the self-propelled vehicle (10), in the first transmission step the wire (201) radiating said driving signal (30) through an electromagnetic field.

14. Method according to claim 13, wherein said method comprises a further generation step of a driving signal (30) for the self-propelled vehicle (10), wherein the further generation step comprises a generation of at least one main portion (30') of the driving signal (30), suited to cause an identification of a positional relationship between the self-propelled vehicle (10) and the wire (201) and/or an identification of a working perimeter for the self-propelled vehicle (10), said working perimeter being defined by the wire (201), the method comprising at least one further transmission step, wherein the driving signal (30) for the self-propelled vehicle (10) generated in the further generation step is fed on the wire (201) placed in correspondence of the ground or floor (100), in the further transmission step the wire (201) radiating said driving signal (30) through an electromagnetic field and/or

wherein said method comprises a step of stopping the first transmission step so that for a given temporal spacing (Tp), no driving signal (30) is transmitted on the wire (201) and/or
wherein said method comprises the alternative execution of the first generation step of the driving signal (30) and the further generation of the driving signal (30) and/or
wherein in the further generation step of the driving signal (30), the driving signal does not include said auxiliary portion (30", 30''').

15. Method according to claim 13 or to claim 14, further comprising a measurement step of the resistance

(R) of the wire (201) and a step of controlling a voltage and/or a current of said driving signal (30), wherein the voltage and/or the current of the driving signal (30) is modified in relation to the resistance (R) of the wire (201),
optionally wherein said method comprises a reception step of the driving signal (30) on at least one electromagnetic signal receiving element (12', 12") of the self-propelled vehicle (10), wherein the main portion (30') suited to cause an identification of a positional relationship between the self-propelled vehicle (10) and the wire (201) and/or an identification of a perimeter defined by the wire (201) is configured and specifically intended to allow determining a position assumed by the self-propelled vehicle (10) and said main portion (30') comprises its own unique coding, optionally its own unique binary coding, and the reception step of the driving signal (30) on the at least one electromagnetic signal receiving element (12', 12") of the self-propelled vehicle (10) is followed by a step of extracting said coding, optionally by a step of extracting the binary coding, and by a step of electronic determination of a distance instantaneously assumed by the self-propelled vehicle (10) with respect to the wire (201) according to said coding, optionally according to said binary coding, and/or according to a power and/or according to an electromagnetic field intensity with which the driving signal (30) is received on said electromagnetic signal receiving element (12', 12").

FIG.1

EP 4 235 352 A2

FIG.2

EP 4 235 352 A2

FIG.3

FIG.4

SYSTEM ACTIVATION —1000

WIRE RESISTANCE MEASUREMENT —1001

FEEDBACK TO THE BUCK —1002

DRIVING SIGNAL GENERATION —1003

DRIVING SIGNAL TRANSMISSION
BY WIRE —1004

SIGNAL RECEPTION
BY SELF-PROPELLED VEHICLE —1005

SEQUENCE DECODING —1006

SELF-PROPELLED VEHICLE
MOVIMENTATION —1007

FIG.5

**EP 4 235 352 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200033386 A1